# EUROPÄISCHE PATENTSCHRIFT

(11) **EP 3 888 441 B1**
(45) Veröffentlichungstag und Bekanntmachung des Hinweises auf die Patenterteilung: **30.07.2025**
(21) Anmeldenummer: 20166760.7
(22) Anmeldetag: 30.03.2020
(51) Int. Cl.: A01D 34/73

(54) **MÄHWERK FÜR EINEN RASENMÄHER UND/ODER EINE MOTORSENSE, RASENMÄHER UND/ODER MOTORSENSE UND VERFAHREN ZUM MONTIEREN EINES MÄHWERKS UND/ODER EINES RASENMÄHERS UND/ODER EINER MOTORSENSE**
MOWING DEVICE FOR A LAWNMOWER AND / OR A STRIMMER, LAWNMOWER AND / OR A STRIMMER AND METHOD FOR MOUNTING A MOWING DEVICE AND / OR A LAWNMOWER AND / OR A STRIMMER
BARRE DE COUPE POUR UNE TONDEUSE À GAZON ET/OU UNE MOTOFAUCHEUSE, TONDEUSE À GAZON ET/OU MOTOFAUCHEUSE ET PROCÉDÉ DE MONTAGE D'UNE BARRE DE COUPE ET/OU D'UNE TONDEUSE À GAZON ET/OU D'UNE MOTOFAUCHEUSE

(43) Veröffentlichungstag der Anmeldung: 06.10.2021
(73) Patentinhaber: Andreas Stihl AG & Co. KG, 71336 Waiblingen (DE)
(72) Erfinder: WOLF, Philip, 6341 Ebbs (AT); GASSNER, Markus, 6345 Kössen (AT); FIEBIG, Marko, 6336 Langkampfen (AT)
(74) Vertreter: Patentanwälte Ruff, Wilhelm, Beier, Dauster & Partner mbB

(56) Entgegenhaltungen:
- EP-A1- 0 517 645
- EP-B1- 3 102 021
- DE-A1- 2 058 347
- FR-A1- 2 770 964
- KR-Y1- 200 207 294
- US-A1- 2009 308 044

## Beschreibung

### ANWENDUNGSGEBIET UND STAND DER TECHNIK

Die Erfindung bezieht sich auf ein Mähwerk für einen Rasenmäher und/oder eine Motorsense, einen Rasenmäher und/oder eine Motorsense aufweisend ein solches Mähwerk und ein Verfahren zum Montieren eines solchen Mähwerks und/oder eines solchen Rasenmähers und/oder einer solchen Motorsense.

Die US 2009/308044 A1 offenbart eine Rasenmäherklingenanordnung für eine drehbare Antriebswelle umfassend eine Klingenhalterung, die an der drehbaren Antriebswelle zu befestigen ist, und eine Schneidklinge, die lösbar mit der Klingenhalterung gekoppelt ist und damit eine Klingenbasiseinheit mit mindestens einer Keilfläche daran definiert. Mindestens ein Gleithalter koppelt die Schneidklinge lösbar mit der Klingenhalterung und ist gleitend zwischen einer verriegelten Position und einer gelösten Position bewegbar. Der mindestens eine Gleithalter weist mindestens eine Keilfläche daran auf, die mit der mindestens einen Keilfläche der Klingenbasiseinheit zusammenwirkt, um die Schneidklinge sicher mit der Klingenhalterung zu koppeln, wenn sie sich in der verriegelten Position befindet.

Die DE 2058347 A1 offenbart einen Mährotor für einen Rotormäher mit einem Schneidteller, über dessen Breitseite ein einen Durchbruch des Mähmessers durchdringender Zapfen vorragt, auf dem das Mähmesser durch am Schneidteller gehalterte bewegliche Sicherungsmittel lösbar festlegbar ist, wobei das Sicherungsmittel als am Schneidteller parallel zu dessen Breitseite beweglicher, in der Wirklage am Zapfenkopf gebildete Stützflächen untergreifender Riegel ausgebildet ist.

Die KR 200207294 Y1 offenbart eine auswechselbare Schneidklinge.

Die EP 3 102 021 B1 offenbart ein Roboter-Arbeitswerkzeugsystem, das ein Roboter-Arbeitswerkzeug umfasst, wobei das Roboter-Arbeitswerkzeug einen Werkzeughalter, z. B. in Form einer Scheibe, eines Vielecks oder mit mehreren Armen, geeignet zum Halten mindestens eines Werkzeugs und geeignet zur Anordnung im Roboter-Arbeitswerkzeug umfasst, wobei der Werkzeughalter mindestens ein Werkzeugbefestigungsmittel und mindestens ein Federbefestigungsmittel umfasst, wobei jedes Werkzeugbefestigungsmittel außerhalb eines jeweiligen Federbefestigungsmittels auf einem Radius des Werkzeughalters positioniert ist. Der Werkzeughalter ist scheibenförmig, vieleckförmig oder umfasst mindestens einen rotierenden Arm und ist mit zwei unabhängigen Befestigungsmitteln für jedes Werkzeug ausgestattet. Durch die Ausstattung des Werkzeughalters mit Federbefestigungsmitteln könnten Tellerfedern als weitere Befestigungsmittel für die Werkzeuge am Werkzeughalter angebracht werden, was einen schnellen Werkzeugwechsel ermöglicht.

### AUFGABE UND LÖSUNG

Der Erfindung liegt als Aufgabe die Bereitstellung eines Mähwerks für einen Rasenmäher und/oder eine Motorsense, eines Rasenmähers und/oder einer Motorsense aufweisend ein solches Mähwerk und/oder eines Verfahrens zum Montieren eines solchen Mähwerks und/oder eines solchen Rasenmähers und/oder einer solchen Motorsense zugrunde, das und/oder der und/oder die jeweils verbesserte Eigenschaften aufweist.

Die Erfindung löst diese Aufgabe durch die Bereitstellung eines Mähwerks mit den Merkmalen des Anspruchs 1. Des Weiteren wird die der Erfindung zugrundeliegende Aufgabe durch die Bereitstellung eines Rasenmähers und/oder einer Motorsense mit den Merkmalen des Anspruchs 12 gelöst. Außerdem wird die der Erfindung zugrundeliegende Aufgabe durch die Bereitstellung eines Verfahrens mit den Merkmalen des Anspruchs 14 gelöst. Vorteilhafte Weiterbildungen und/oder Ausgestaltungen der Erfindung sind in den abhängigen Ansprüchen beschrieben.

Das erfindungsgemäße Mähwerk ist für einen Rasenmäher, insbesondere einen Roboterrasenmäher, und/oder eine Motorsense ausgebildet bzw. konfiguriert bzw. vorgesehen. Das Mähwerk umfasst bzw. weist mindestens eine Werkzeugeinrichtung, insbesondere nur, eine, insbesondere einzige, Werkzeugverbindungseinrichtung und, insbesondere nur, eine, insbesondere einzige, Sicherungseinrichtung auf. Die Werkzeugeinrichtung ist zum Schneiden von Gras ausgebildet bzw. konfiguriert. Die Werkzeugverbindungseinrichtung ist zur, insbesondere unmittelbaren bzw. direkten, Rotation bzw. Rotationsbewegung bzw. rotatorischen Bewegung um eine, insbesondere zentrale, Mähwerkrotationsachse des Mähwerks herum ausgebildet bzw. konfiguriert. Des Weiteren sind die Werkzeugverbindungseinrichtung und die Werkzeugeinrichtung zu einer, insbesondere lösbaren, insbesondere werkzeugfrei und/oder zerstörungsfrei lösbaren, formschlüssigen Verbindung, insbesondere unmittelbar bzw. direkt, miteinander zur, insbesondere unmittelbaren bzw. direkten und/oder formschlüssigen, Sicherung der, insbesondere dann, formschlüssig verbundenen Werkzeugeinrichtung gegen Lösung von der Werkzeugverbindungseinrichtung in Radialrichtung radial, insbesondere und somit orthogonal, in Bezug auf die Mähwerkrotationsachse ausgebildet bzw. konfiguriert. Die Sicherungseinrichtung und die Werkzeugverbindungseinrichtung sind mindestens teilweise relativ zueinander in oder entgegen mindestens teilweiser, insbesondere nur, Radialrichtung mindestens abschnittsweise zwischen einer Freigabestellung zur, insbesondere unmittelbaren bzw. direkten, Freigabe zur, insbesondere unmittelbaren bzw. direkten, Herstellung und/oder Lösung der formschlüssigen Verbindung, insbesondere durch einen Benutzer, und einer Sicherungsstellung zur, insbesondere unmittelbaren bzw. direkten und/oder formschlüssigen, Sicherung der formschlüssigen Verbindung gegen Lösung, insbesondere und zurück, verstellbar, insbesondere verstellbeweglich, insbesondere durch den Benutzer, ausgebildet bzw. konfiguriert.

Dies, insbesondere die Freigabestellung, ermöglicht einen, insbesondere werkzeugfreien und/oder zerstörungsfreien, Wechsel bzw. einen, insbesondere werkzeugfreien und/oder zerstörungsfreien, Austausch der Werkzeugeinrichtung, insbesondere durch den Benutzer. Zusätzlich ermöglicht dies, insbesondere die Verstellbarkeit bzw. die Verstellung in oder entgegen Radialrichtung, dass die Verstellung unabhängig von der Rotation sein kann, insbesondere nicht durch die Rotation ohne den Benutzer bzw. unbeabsichtigt von der Sicherungsstellung in die Freigabestellung bewirkt werden kann. Somit ermöglicht dies eine hohe Sicherheit.

Insbesondere kann das Mähwerk zur, insbesondere unmittelbaren bzw. direkten, Rotation um die Mähwerkrotationsachse herum ausgebildet sein.

Die Werkzeugeinrichtung, die Werkzeugverbindungseinrichtung und die Sicherungseinrichtung können verschieden sein.

Die Werkzeugeinrichtung kann bei, insbesondere durch, Rotation der Werkzeugverbindungseinrichtung um die Mähwerkrotationsachse herum über einen, insbesondere jeweiligen, in Radialrichtung äußeren Rand der Werkzeugverbindungseinrichtung und/oder der Sicherungseinrichtung ragen. Zusätzlich oder alternativ kann die Werkzeugeinrichtung eine Schneidmessereinrichtung, insbesondere ein Schneidmesser, insbesondere mit mindestens einer Schneidklinge, aufweisen, insbesondere sein. Weiter zusätzlich oder alternativ kann die Werkzeugeinrichtung dazu ausgebildet sein, Gras im sogenannten Freischnittverfahren ohne Gegenwerkzeugeinrichtung, insbesondere Gegenschneide, zu schneiden. Weiter zusätzlich oder alternativ kann die Werkzeugeinrichtung ein Werkzeugelement sein. Weiter zusätzlich oder alternativ kann die Werkzeugeinrichtung einstückig sein.

Die Werkzeugverbindungseinrichtung kann ein Werkzeugverbindungselement sein. Zusätzlich oder alternativ kann die Werkzeugverbindungseinrichtung einstückig sein.

Die Sicherungseinrichtung kann ein Sicherungselement sein. Zusätzlich oder alternativ kann die Sicherungseinrichtung einstückig sein. Weiter zusätzlich oder alternativ kann die Sicherungseinrichtung zur, insbesondere unmittelbaren bzw. direkten, Rotation um die Mähwerkrotationsachse herum ausgebildet sein.

Das Mähwerk kann eine Wellenaufnahme, insbesondere kann die Werkzeugverbindungseinrichtung eine erste Wellenaufnahme und/oder die Sicherungseinrichtung kann eine zweite Wellenaufnahme, zur Aufnahme einer Rotationswelle, insbesondere in einer in Bezug auf die Mähwerkrotationsachse nicht-orthogonalen, insbesondere parallelen, Axialrichtung, aufweisen. Die Wellenaufnahme kann, insbesondere kann die erste Wellenaufnahme und/oder die zweite Wellenaufnahme kann, die Mähwerkrotationsachse definieren. Zusätzlich oder alternativ kann die Mähwerkrotationsachse eine Mähwerklängsachse des Mähwerks sein. Weiter zusätzlich oder alternativ kann nicht-orthogonal eine Abweichung, insbesondere eine Winkelabweichung, in Bezug auf die Mähwerkrotationsachse von maximal 30 Grad (°), insbesondere maximal 20 °, insbesondere maximal 10°, bedeuten.

Die Freigabestellung und die Sicherungsstellung können verschieden sein.

Durch die Verstellung von der Freigabestellung in die Sicherungsstellung braucht oder kann die formschlüssige Verbindung nicht hergestellt sein bzw. zu werden. Zusätzlich oder alternativ braucht oder kann durch die Verstellung von der Sicherungsstellung in die Freigabestellung die formschlüssige Verbindung nicht gelöst zu sein bzw. zu werden. In anderen Worten: Die Werkzeugverbindungseinrichtung und die Werkzeugeinrichtung können zu der formschlüssigen Verbindung miteinander mindestens in der Sicherungsstellung, insbesondere und in der Freigabestellung, ausgebildet sein.

Die Werkzeugverbindungseinrichtung und die Werkzeugeinrichtung können zu einer, insbesondere der und/oder lösbaren, insbesondere werkzeugfrei und/oder zerstörungsfrei lösbaren, formschlüssigen Verbindung miteinander zur, insbesondere unmittelbaren bzw. direkten und/oder formschlüssigen, Sicherung der formschlüssig verbundenen Werkzeugeinrichtung gegen Lösung von der Werkzeugverbindungseinrichtung entgegen Radialrichtung und/oder in und/oder entgegen einer Rotationsrichtung um die Mähwerkrotationsachse herum ausgebildet sein.

Die Radialrichtung kann orthogonal zu einer, insbesondere der, Rotationsrichtung um die Mähwerkrotationsachse herum sein.

Die Sicherungseinrichtung und die Werkzeugverbindungseinrichtung brauchen oder können mindestens teilweise, insbesondere vollständig, relativ zueinander in oder entgegen einer, insbesondere der, Rotationsrichtung um die Mähwerkrotationsachse herum und/oder rotatorisch zwischen der Freigabestellung und der Sicherungsstellung nicht verstellbar ausgebildet sein. Zusätzlich oder alternativ können die Sicherungseinrichtung und die Werkzeugverbindungseinrichtung mindestens teilweise relativ zueinander translatorisch zwischen der Freigabestellung und der Sicherungsstellung verstellbar ausgebildet sein.

Mindestens teilweiser Radialrichtung kann eine Abweichung, insbesondere eine Winkelabweichung, in Bezug auf die Radialrichtung von maximal 45 °, insbesondere maximal 30 °, insbesondere maximal 15 °, bedeuten.

Die Sicherungseinrichtung und die Werkzeugverbindungseinrichtung sind mindestens teilweise relativ zueinander in einer, insbesondere der, in Bezug auf die Mähwerkrotationsachse nicht-orthogonalen, insbesondere parallelen, Axialrichtung abschnittsweise zwischen der Freigabestellung und der Sicherungsstellung verstellbar ausgebildet bzw. konfiguriert. Die Sicherungseinrichtung und die Werkzeugverbindungseinrichtung sind mindestens teilweise relativ zueinander in, insbesondere nur, der Axialrichtung in einem ersten Verstellabschnitt bzw. Verstellbewegungsabschnitt zwischen der Freigabestellung und einer Zwischenstellung und in oder entgegen, insbesondere nur, Radialrichtung in einem, insbesondere von dem ersten Verstellabschnitt verschiedenen, zweiten Verstellabschnitt bzw. Verstellbewegungsabschnitt zwischen der Zwischenstellung und der Sicherungsstellung verstellbar ausgebildet bzw. konfiguriert. Dies ermöglicht eine besonders hohe Sicherheit gegen unbeabsichtigte Verstellung von der Sicherungsstellung in die Freigabestellung. Insbesondere kann die Zwischenstellung von der Sicherungsstellung und der Freigabestellung verschieden sein. Zusätzlich oder alternativ kann nicht-orthogonal eine Abweichung, insbesondere eine Winkelabweichung, in Bezug auf die Mähwerkrotationsachse von maximal 30 °, insbesondere maximal 20 °, insbesondere maximal 10°, bedeuten. Weiter zusätzlich oder alternativ braucht oder kann die Axialrichtung nicht-parallel, insbesondere orthogonal, in Bezug auf die Radialrichtung sein. Insbesondere kann nicht-parallel eine Abweichung, insbesondere eine Winkelabweichung, in Bezug auf die Radialrichtung von minimal 60 °, insbesondere minimal 70 °, insbesondere minimal 80°, bedeuten.

In einer Weiterbildung der Erfindung umfasst bzw. weist die Werkzeugeinrichtung oder die Werkzeugverbindungseinrichtung einen Stift bzw. einen Bolzen bzw. einen Pin auf. Die Werkzeugverbindungseinrichtung oder die Werkzeugeinrichtung umfasst bzw. weist eine Stiftaufnahme auf. Der Stift und die Stiftaufnahme sind zur Aufnahme des Stifts, insbesondere parallel zu einer Stiftlängsachse des Stifts, zu der formschlüssigen Verbindung ausgebildet bzw. konfiguriert. Insbesondere ist die Stiftlängsachse nicht-orthogonal, insbesondere parallel, in Bezug auf die Mähwerkrotationsachse. Dies ermöglicht eine einfache Herstellung der formschlüssigen Verbindung und/oder eine Rotation der Werkzeugeinrichtung um die Stiftlängsachse herum. Insbesondere kann die Stiftaufnahme ein Loch, insbesondere ein Durchgangsloch, sein. Zusätzlich oder alternativ kann die Stiftlängsachse dezentral sein und/oder die Stiftlängsachse braucht oder kann nicht-koaxial in Bezug auf die Mähwerkrotationsachse sein. Weiter zusätzlich oder alternativ kann nicht-orthogonal eine Abweichung, insbesondere eine Winkelabweichung, in Bezug auf die Mähwerkrotationsachse von maximal 30 °, insbesondere maximal 20 °, insbesondere maximal 10°, bedeuten. Weiter zusätzlich oder alternativ braucht oder kann die Stiftlängsachse nicht-parallel, insbesondere orthogonal, in Bezug auf die Radialrichtung sein. Insbesondere kann nicht-parallel eine Abweichung, insbesondere eine Winkelabweichung, in Bezug auf die Radialrichtung von minimal 60 °, insbesondere minimal 70 °, insbesondere minimal 80°, bedeuten. Weiter zusätzlich oder alternativ kann die Werkzeugeinrichtung sich mindestens bei, insbesondere durch, Rotation der Werkzeugverbindungseinrichtung um die Mähwerkrotationsachse herum von der Stiftlängsachse in Radialrichtung wegerstrecken.

In einer Weiterbildung der Erfindung sind die Werkzeugverbindungseinrichtung und die Werkzeugeinrichtung zu einer, insbesondere weiteren und/oder lösbaren, insbesondere werkzeugfrei und/oder zerstörungsfrei lösbaren, formschlüssigen Verbindung, insbesondere unmittelbar bzw. direkt, miteinander mindestens in der Sicherungsstellung, insbesondere und in der Freigabestellung, zur, insbesondere unmittelbaren bzw. direkten und/oder formschlüssigen, Sicherung der, insbesondere dann, formschlüssig verbundenen Werkzeugeinrichtung gegen Lösung von der Werkzeugverbindungseinrichtung in einer, insbesondere der, ersten in Bezug auf die Mähwerkrotationsachse nicht-orthogonalen, insbesondere parallelen, Axialrichtung ausgebildet bzw. konfiguriert.

Zusätzlich oder alternativ sind die Sicherungseinrichtung und die Werkzeugeinrichtung zu einer, insbesondere lösbaren, insbesondere werkzeugfrei und/oder zerstörungsfrei lösbaren, formschlüssigen Verbindung, insbesondere unmittelbar bzw. direkt, miteinander in, insbesondere nur, der Sicherungsstellung zur, insbesondere unmittelbaren bzw. direkten und/oder formschlüssigen, Sicherung der, insbesondere dann, formschlüssig verbundenen Werkzeugeinrichtung gegen Lösung von der Sicherungseinrichtung in einer, insbesondere der und/oder der ersten Axialrichtung entgegengesetzten, zweiten in Bezug auf die Mähwerkrotationsachse nicht-orthogonalen, insbesondere parallelen, Axialrichtung ausgebildet bzw. konfiguriert.

Weiter zusätzlich oder alternativ sind die Sicherungseinrichtung und die Werkzeugverbindungseinrichtung zu einer, insbesondere lösbaren, insbesondere werkzeugfrei und/oder zerstörungsfrei lösbaren, formschlüssigen Verbindung, insbesondere unmittelbar bzw. direkt, miteinander in, insbesondere nur, der Sicherungsstellung zur, insbesondere unmittelbaren bzw. direkten und/oder formschlüssigen, Sicherung gegen Lösung voneinander in, insbesondere mindestens, einer, insbesondere der ersten und/oder der zweiten, in Bezug auf die Mähwerkrotationsachse nicht-orthogonalen, insbesondere parallelen, Axialrichtung ausgebildet bzw. konfiguriert.

Insbesondere kann nicht-orthogonal eine Abweichung, insbesondere eine Winkelabweichung, in Bezug auf die Mähwerkrotationsachse von maximal 30 °, insbesondere maximal 20 °, insbesondere maximal 10°, bedeuten. Zusätzlich oder alternativ braucht oder kann die, insbesondere erste oder zweite, Axialrichtung nicht-parallel, insbesondere orthogonal, in Bezug auf die Radialrichtung sein. Insbesondere kann nicht-parallel eine Abweichung, insbesondere eine Winkelabweichung, in Bezug auf die Radialrichtung von minimal 60 °, insbesondere minimal 70 °, insbesondere minimal 80°, bedeuten. Weiter zusätzlich oder alternativ kann durch die Verstellung von der Freigabestellung in die Sicherungsstellung die formschlüssige Verbindung der Sicherungseinrichtung und der Werkzeugeinrichtung miteinander und/oder der Sicherungseinrichtung und der Werkzeugverbindungseinrichtung miteinander hergestellt sein bzw. werden. Weiter zusätzlich oder alternativ kann durch die Verstellung von der Sicherungsstellung in die Freigabestellung die formschlüssige Verbindung der Sicherungseinrichtung und der Werkzeugeinrichtung miteinander und/oder der Sicherungseinrichtung und der Werkzeugverbindungseinrichtung miteinander gelöst sein bzw. werden. In anderen Worten: Die Sicherungseinrichtung und die Werkzeugeinrichtung und/oder die Sicherungseinrichtung und die Werkzeugverbindungseinrichtung brauchen oder können zu der formschlüssigen Verbindung miteinander in der Freigabestellung nicht ausgebildet sein. Weiter zusätzlich oder alternativ kann die formschlüssige Verbindung der Sicherungseinrichtung und der Werkzeugeinrichtung miteinander und/oder der Sicherungseinrichtung und der Werkzeugverbindungseinrichtung miteinander zur Sicherung der formschlüssigen Verbindung der Werkzeugverbindungseinrichtung und der Werkzeugeinrichtung miteinander zur Sicherung der formschlüssig verbundenen Werkzeugeinrichtung gegen Lösung von der Werkzeugverbindungseinrichtung in Radialrichtung ausgebildet sein, insbesondere sichern, und/oder die Sicherung bewirken. Weiter zusätzlich oder alternativ kann die formschlüssige Verbindung der Sicherungseinrichtung und der Werkzeugverbindungseinrichtung miteinander in einer, insbesondere jeweiligen, in Radialrichtung äußeren Hälfte, insbesondere an einem, insbesondere jeweiligen, in Radialrichtung äußeren Rand, der Sicherungseinrichtung und/oder der Werkzeugverbindungseinrichtung, insbesondere angeordnet, sein. Dies kann ein Vermeiden oder sogar ein Verhindern eines äußeren Aufhebelns bzw. Aufbiegens ermöglichen. Weiter zusätzlich oder alternativ kann die formschlüssige Verbindung der Sicherungseinrichtung und der Werkzeugverbindungseinrichtung miteinander in der Nähe, insbesondere an, der Werkzeugeinrichtung, insbesondere angeordnet, sein.

In einer Weiterbildung, insbesondere einer Ausgestaltung, der Erfindung umfasst bzw. weist, insbesondere entweder, die Werkzeugverbindungseinrichtung oder die Sicherungseinrichtung, insbesondere nur, eine, insbesondere einzige und/oder kreisförmige, Abdeckscheibe bzw. - platte auf. Die Abdeckscheibe ist zur, insbesondere unmittelbaren bzw. direkten, Rotation bzw. Rotationsbewegung bzw. rotatorischen Bewegung um die Mähwerkrotationsachse herum und zur Abdeckung der, insbesondere weiteren, formschlüssigen Verbindung der Werkzeugverbindungseinrichtung und der Werkzeugeinrichtung miteinander, soweit vorgesehen, und/oder der Sicherungseinrichtung und der Werkzeugeinrichtung miteinander, soweit vorgesehen, in einer, insbesondere der, in Bezug auf die Mähwerkrotationsachse nicht-orthogonalen, insbesondere parallelen, Axialrichtung ausgebildet bzw. konfiguriert. Dies ermöglicht einen Schutz der formschlüssigen Verbindung vor einem Kontakt bzw. einer Berührung mit Gras und/oder einem Gras- bzw. Rasenboden. Insbesondere kann die Abdeckscheibe als Gleitscheibe bezeichnet werden. Zusätzlich oder alternativ kann nicht-orthogonal eine Abweichung, insbesondere eine Winkelabweichung, in Bezug auf die Mähwerkrotationsachse von maximal 30 °, insbesondere maximal 20 °, insbesondere maximal 10°, bedeuten. Weiter zusätzlich oder alternativ braucht oder kann die Axialrichtung nicht-parallel, insbesondere orthogonal, in Bezug auf die Radialrichtung sein. Insbesondere kann nicht-parallel eine Abweichung, insbesondere eine Winkelabweichung, in Bezug auf die Radialrichtung von minimal 60 °, insbesondere minimal 70 °, insbesondere minimal 80°, bedeuten.

Insbesondere kann durch die Verstellung von der Freigabestellung in die Zwischenstellung die formschlüssige Verbindung der Sicherungseinrichtung und der Werkzeugeinrichtung miteinander, soweit vorgesehen, hergestellt sein bzw. werden. Zusätzlich oder alternativ kann durch die Verstellung von der Zwischenstellung in die Freigabestellung die formschlüssige Verbindung der Sicherungseinrichtung und der Werkzeugeinrichtung miteinander, soweit vorgesehen, gelöst sein bzw. werden. Weiter zusätzlich oder alternativ kann durch die Verstellung von der Zwischenstellung in die Sicherungsstellung die formschlüssige Verbindung der Sicherungseinrichtung und der Werkzeugverbindungseinrichtung miteinander, soweit vorgesehen, hergestellt sein bzw. werden. Weiter zusätzlich oder alternativ kann durch die Verstellung von der Sicherungsstellung in die Zwischenstellung die formschlüssige Verbindung der Sicherungseinrichtung und der Werkzeugverbindungseinrichtung miteinander, soweit vorgesehen, gelöst sein bzw. werden.

In einer Weiterbildung der Erfindung umfasst bzw. weist das Mähwerk mehrere Werkzeugeinrichtungen auf. Die Werkzeugeinrichtungen sind, insbesondere jeweils, zum Schneiden von Gras ausgebildet bzw. konfiguriert. Die Werkzeugverbindungseinrichtung und die Werkzeugeinrichtungen, insbesondere jeweils, sind zu, insbesondere lösbaren, insbesondere werkzeugfrei und/oder zerstörungsfrei lösbaren, formschlüssigen Verbindungen, insbesondere unmittelbar bzw. direkt, miteinander zur, insbesondere unmittelbaren bzw. direkten und/oder formschlüssigen, Sicherung der, insbesondere dann, formschlüssig verbundenen Werkzeugeinrichtungen gegen Lösung von der Werkzeugverbindungseinrichtung in verschiedene, insbesondere jeweilige, Radialrichtungen radial, insbesondere und somit orthogonal, in Bezug auf die Mähwerkrotationsachse ausgebildet bzw. konfiguriert. Die Sicherungseinrichtung und die Werkzeugverbindungseinrichtung sind mindestens teilweise relativ zueinander zwischen der Freigabestellung zur, insbesondere unmittelbaren bzw. direkten, Freigabe zur, insbesondere unmittelbaren bzw. direkten, Herstellung und/oder Lösung der formschlüssigen Verbindungen und der Sicherungsstellung zur, insbesondere unmittelbaren bzw. direkten und/oder formschlüssigen, Sicherung der formschlüssigen Verbindungen gegen Lösung verstellbar ausgebildet bzw. konfiguriert. Dies ermöglicht eine einfache Herstellung der formschlüssigen Verbindungen. Insbesondere können die Werkzeugeinrichtungen baugleich sein. Zusätzlich oder alternativ können die formschlüssig verbundenen Werkzeugeinrichtungen in einer, insbesondere der, Rotationsrichtung um die Mähwerkrotationsachse herum, insbesondere regelmäßig, insbesondere äquidistant, angeordnet sein. Die Radialrichtungen können orthogonal zu einer, insbesondere der, Rotationsrichtung um die Mähwerkrotationsachse herum sein.

In einer Ausgestaltung der Erfindung sind die Sicherungseinrichtung und die Werkzeugverbindungseinrichtung vollständig relativ zueinander in oder entgegen nur einer einzigen Radialrichtung mindestens abschnittsweise zwischen der Freigabestellung und der Sicherungsstellung verstellbar ausgebildet bzw. konfiguriert.

Dies ermöglicht eine einfache Verstellung und/oder eine einfache und somit kostengünstige Herstellung des Mähwerks, insbesondere der Sicherungseinrichtung und/oder der Werkzeugverbindungseinrichtung.

Alternativ sind die Sicherungseinrichtung und die Werkzeugverbindungseinrichtung mit mehreren Teilen relativ zueinander in oder entgegen verschiedene Radialrichtungen mindestens abschnittsweise zwischen der Freigabestellung und der Sicherungsstellung verstellbar ausgebildet bzw. konfiguriert.

Dies ermöglicht eine Symmetrie, insbesondere eine Rotationssymmetrie, des Mähwerks, insbesondere der Sicherungseinrichtung und/oder der Werkzeugverbindungseinrichtung, in einer, insbesondere der, Rotationsrichtung um die Mähwerkrotationsachse herum. Dies ermöglicht eine einfache und somit kostengünstige Herstellung des Mähwerks, insbesondere der Sicherungseinrichtung und/oder der Werkzeugverbindungseinrichtung.

In einer Weiterbildung, insbesondere Ausgestaltung, der Erfindung ist, insbesondere entweder, die Sicherungseinrichtung oder die Werkzeugverbindungseinrichtung zur Veränderung mindestens einer, insbesondere ihrer, Abmessung bzw. einer, insbesondere ihrer, Ausdehnung, insbesondere eines, insbesondere ihres, Radius, in Radialrichtung, insbesondere in verschiedene Radialrichtungen, soweit vorgesehen, zur Verstellung mindestens abschnittsweise zwischen der Freigabestellung und der Sicherungsstellung ausgebildet bzw. konfiguriert. Insbesondere kann die Abmessung in der Freigabestellung, insbesondere und der Zwischenstellung, klein und in der Sicherungsstellung groß sein. Dies kann eine besonders hohe Sicherheit gegen unbeabsichtigte Verstellung von der Sicherungsstellung in die Freigabestellung ermöglichen.

In einer Ausgestaltung der Erfindung umfasst bzw. weist, insbesondere entweder, die Sicherungseinrichtung oder die Werkzeugverbindungseinrichtung ein Axialteil und mindestens ein mit dem Axialteil, insbesondere unmittelbar oder mittelbar, beweglich verbundenes Radialteil auf. Dabei sind das Axialteil in, insbesondere nur, einer, insbesondere der, in Bezug auf die Mähwerkrotationsachse nicht-orthogonalen, insbesondere parallelen, Axialrichtung und das Radialteil in mindestens teilweiser Radialrichtung zur Veränderung der Abmessung, insbesondere relativ zueinander, verstellbar, insbesondere verstellbeweglich, ausgebildet bzw. konfiguriert. Insbesondere können das Axialteil und das Radialteil verschieden sein. Zusätzlich oder alternativ kann nicht-orthogonal eine Abweichung, insbesondere eine Winkelabweichung, in Bezug auf die Mähwerkrotationsachse von maximal 30 °, insbesondere maximal 20 °, insbesondere maximal 10°, bedeuten. Weiter zusätzlich oder alternativ braucht oder kann die Axialrichtung nicht-parallel, insbesondere orthogonal, in Bezug auf die Radialrichtung sein. Insbesondere kann nicht-parallel eine Abweichung, insbesondere eine Winkelabweichung, in Bezug auf die Radialrichtung von minimal 60 °, insbesondere minimal 70 °, insbesondere minimal 80°, bedeuten. Weiter zusätzlich oder alternativ kann das Radialteil in nur Radialrichtung verstellbar ausgebildet sein. Dies kann eine relativ große Veränderung der Abmessung ermöglichen. Weiter zusätzlich oder alternativ kann das Axialteil auf oder in Verlängerung der Mähwerkrotationsachse, insbesondere angeordnet, sein. Weiter zusätzlich oder alternativ kann das Radialteil von der Mähwerkrotationsachse und/oder dem Axialteil in Radialrichtung nach außen, insbesondere angeordnet, sein. Weiter zusätzlich oder alternativ können das Axialteil und das Radialteil zur Verstellung des Radialteils durch Verstellung des Axialteils ausgebildet sein.

In einer Weiterbildung, insbesondere Ausgestaltung, der Erfindung umfasst bzw. weist, insbesondere entweder, die Sicherungseinrichtung oder die Werkzeugverbindungseinrichtung mindestens ein drehbares Gelenk, insbesondere ein Drehgelenk, bzw. ein Scharnier zur Verstellung mindestens abschnittsweise zwischen der Freigabestellung und der Sicherungsstellung auf. Insbesondere sind das Axialteil und das Radialteil, soweit vorgesehen, mittels des mindestens einen Gelenks zur Veränderung der Abmessung verstellbeweglich verbunden. Insbesondere kann das Gelenk ein Filmscharnier sein. Dies kann eine einfache und somit kostengünstige Herstellung des Mähwerks, insbesondere der Sicherungseinrichtung oder der Werkzeugverbindungseinrichtung, ermöglichen. Zusätzlich oder alternativ kann das Gelenk einen Gelenkstift aufweisen. Dies kann ermöglichen, dass die Verstellung relativ verschleißfrei und/oder relativ glatt sein kann. Weiter zusätzlich oder alternativ kann die Sicherungseinrichtung oder die Werkzeugverbindungseinrichtung pro Radialteil zwei drehbare Gelenke, insbesondere mittels eines Zwischenteils mechanisch verbunden, bzw. ein mehrfach, insbesondere zweifach, drehbares Gelenk, insbesondere ein Mehrfachdrehgelenk, insbesondere Zweifachdrehgelenk, aufweisen. Dies kann die Verstellung des Radialteils in nur Radialrichtung ermöglichen. Weiter zusätzlich oder alternativ kann das mindestens eine Gelenk zur Verstellung des Radialteils durch die Verstellung des Axialteils ausgebildet sein. Weiter zusätzlich oder alternativ kann eine Gelenklängsachse des Gelenks nicht-orthogonal, insbesondere parallel, in Bezug auf eine, insbesondere die, Rotationsrichtung um die Mähwerkrotationsachse herum sein. Insbesondere kann nicht-orthogonal eine Abweichung, insbesondere eine Winkelabweichung, in Bezug auf die Rotationsrichtung von maximal 30 °, insbesondere maximal 20 °, insbesondere maximal 10°, bedeuten.

In einer Weiterbildung, insbesondere einer Ausgestaltung, der Erfindung erstrecken/erstreckt die Werkzeugverbindungseinrichtung und/oder die Sicherungseinrichtung, insbesondere die Abdeckscheibe und/oder das Axialteil, soweit vorgesehen, sich mindestens in der Sicherungsstellung von der Mähwerkrotationsachse, insbesondere unmittelbar bzw. direkt, in Radialrichtung weg.

Zusätzlich oder alternativ umschließen/umschließt die Werkzeugverbindungseinrichtung und/oder die Sicherungseinrichtung, insbesondere die Abdeckscheibe und/oder das Axialteil, soweit vorgesehen, mindestens in der Sicherungsstellung die Mähwerkrotationsachse in einer, insbesondere der, Rotationsrichtung um die Mähwerkrotationsachse herum vollständig.

In einer Weiterbildung der Erfindung umfasst bzw. weist die Werkzeugverbindungseinrichtung eine, insbesondere die, erste Wellenaufnahme zur Aufnahme einer, insbesondere der, Rotationswelle, insbesondere in einer, insbesondere der, in Bezug auf die Mähwerkrotationsachse nicht-orthogonalen, insbesondere parallelen, Axialrichtung, auf. Die Sicherungseinrichtung umfasst bzw. weist eine, insbesondere die, zweite Wellenaufnahme zur Aufnahme der, insbesondere derselben, Rotationswelle, insbesondere in der Axialrichtung, auf. Die erste Wellenaufnahme und die zweite Wellenaufnahme sind relativ zueinander, insbesondere in oder entgegen Radialrichtung und/oder in oder entgegen der Axialrichtung, mindestens abschnittsweise zwischen der Freigabestellung und der Sicherungsstellung verstellbar, insbesondere verstellbeweglich, ausgebildet bzw. konfiguriert. Dies ermöglicht eine, insbesondere formschlüssige, Sicherung gegen Verstellung der ersten Wellenaufnahme und der zweiten Wellenaufnahme in der Sicherungsstellung durch die, insbesondere aufgenommene, Rotationswelle und/oder ein Befestigungselement zur Befestigung des Mähwerks in der Sicherungsstellung an der Rotationswelle in die Freigabestellung, insbesondere und die Zwischenstellung. Insbesondere können die erste Wellenaufnahme und die zweite Wellenaufnahme in der Freigabestellung, insbesondere und der Zwischenstellung, nicht-koaxial in Bezug auf die Mähwerkrotationsachse sein. Zusätzlich oder alternativ kann nicht-orthogonal eine Abweichung, insbesondere eine Winkelabweichung, in Bezug auf die Mähwerkrotationsachse von maximal 30 °, insbesondere maximal 20 °, insbesondere maximal 10°, bedeuten. Weiter zusätzlich oder alternativ braucht oder kann die Axialrichtung nicht-parallel, insbesondere orthogonal, in Bezug auf die Radialrichtung sein. Insbesondere kann nicht-parallel eine Abweichung, insbesondere eine Winkelabweichung, in Bezug auf die Radialrichtung von minimal 60 °, insbesondere minimal 70 °, insbesondere minimal 80°, bedeuten.

Der erfindungsgemäße Rasenmäher und/oder die erfindungsgemäße Motorsense umfassen bzw. weisen, insbesondere jeweils, ein, insbesondere das, Mähwerk wie zuvor beschrieben auf. Insbesondere kann der Rasenmäher ein, insbesondere autonomer mobiler, Robotorrasenmähroboter sein. Zusätzlich oder alternativ kann die Motorsense als Freischneider, Grastrimmer und/oder Rasentrimmer bezeichnet werden. Weiter zusätzlich oder alternativ können/kann der Rasenmäher und/oder die Motorsense, insbesondere jeweils, einen, insbesondere elektrischen, Antriebsmotor zum Antrieb zur Rotation der Werkzeugverbindungseinrichtung, insbesondere des Mähwerks, um die Mähwerkrotationsachse herum aufweisen.

In einer Weiterbildung der Erfindung umfassen/umfasst bzw. weisen/weist der Rasenmäher und/oder die Motorsense, insbesondere jeweils, eine, insbesondere die, Rotationswelle bzw. - nabe bzw. Antriebswelle und ein, insbesondere das, Befestigungselement auf. Die Rotationswelle und das Mähwerk, insbesondere wie zuvor beschrieben, sind zur, insbesondere lösbaren, insbesondere werkzeugfrei und/oder zerstörungsfrei lösbaren, Befestigung des Mähwerks, insbesondere nur, in der Sicherungsstellung an der Rotationswelle mittels des Befestigungselements, insbesondere zur Aufnahme der Rotationswelle, soweit vorgesehen, ausgebildet bzw. konfiguriert. Die, insbesondere dann aufgenommene, Rotationswelle und/oder das Befestigungselement und das befestigte Mähwerk sind zur, insbesondere unmittelbaren bzw. direkten und/oder formschlüssigen, Sicherung gegen, insbesondere relative, Verstellung, insbesondere der ersten Wellenaufnahme und der zweiten Wellenaufnahme, insbesondere zueinander, soweit vorgesehen, in die Freigabestellung, insbesondere und die Zwischenstellung, ausgebildet bzw. konfiguriert. Insbesondere kann die Rotationswelle zur, insbesondere unmittelbaren bzw. direkten, Rotation um die Mähwerkrotationsachse herum ausgebildet sein. Insbesondere können/kann der Rasenmäher und/oder die Motorsense, insbesondere jeweils, einen, insbesondere den und/oder elektrischen, Antriebsmotor zum Antrieb zur Rotation der Rotationswelle um die Mähwerkrotationsachse herum aufweisen.

Das erfindungsgemäße Verfahren ist zum Montieren eines, insbesondere des, Mähwerks wie zuvor beschrieben und/oder eines, insbesondere des, Rasenmähers und/oder einer, insbesondere der, Motorsense wie zuvor beschrieben ausgebildet bzw. konfiguriert bzw. vorgesehen. Das Verfahren umfasst bzw. weist die Schritte auf: a) Herstellen der formschlüssigen Verbindung der Werkzeugverbindungseinrichtung und der Werkzeugeinrichtung miteinander, insbesondere durch den Benutzer. b) Verstellen der Sicherungseinrichtung und der Werkzeugverbindungseinrichtung mindestens teilweise relativ zueinander zwischen der Freigabestellung und der Sicherungsstellung, insbesondere durch den Benutzer. Insbesondere kann der Schritt b) zeitlich nach dem Schritt a) ausgeführt werden.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: einen erfindungsgemäßen Rasenmäher und eine erfindungsgemäße Motorsense jeweils aufweisend ein erfindungsgemäßes Mähwerk und ein erfindungsgemäßes Verfahren,
- Fig. 2: eine Perspektivansicht eines ersten Ausführungsbeispiels eines erfindungsgemäßen Mähwerks in einer Sicherungsstellung und das Verfahren,
- Fig. 3: eine weitere Perspektivansicht des Mähwerks der Fig. 2 und das Verfahren,
- Fig. 4: eine Längsschnittansicht des Mähwerks der Fig. 2 und das Verfahren,
- Fig. 5: eine Perspektivansicht des Mähwerks der Fig. 2 in einer Zwischenstellung und das Verfahren,
- Fig. 6: eine Längsschnittansicht des Mähwerks der Fig. 5 und das Verfahren,
- Fig. 7: eine Perspektivansicht des Mähwerks der Fig. 2 in einer Freigabestellung und das Verfahren,
- Fig. 8: eine Perspektivansicht eines zweiten Ausführungsbeispiels eines erfindungsgemäßen Mähwerks in einer Sicherungsstellung und das Verfahren,
- Fig. 9: eine Längsschnittansicht des Mähwerks der Fig. 8 und das Verfahren,
- Fig. 10: eine Perspektivansicht des Mähwerks der Fig. 8 in einer Zwischenstellung und das Verfahren,
- Fig. 11: eine Längsschnittansicht des Mähwerks der Fig. 10 und das Verfahren,
- Fig. 12: eine Perspektivansicht des Mähwerks der Fig. 8 in einer Freigabestellung und das Verfahren,
- Fig. 13: eine Perspektivansicht eines dritten Ausführungsbeispiels eines erfindungsgemäßen Mähwerks in einer Sicherungsstellung und das Verfahren,
- Fig. 14: eine Längsschnittansicht des Mähwerks der Fig. 13 und das Verfahren,
- Fig. 15: eine weitere Perspektivansicht des Mähwerks der Fig. 13 und das Verfahren,
- Fig. 16: eine Perspektivansicht des Mähwerks der Fig. 13 in einer Zwischenstellung und das Verfahren,
- Fig. 17: eine weitere Perspektivansicht des Mähwerks der Fig. 16 und das Verfahren,
- Fig. 18: eine Längsschnittansicht des Mähwerks der Fig. 16 und das Verfahren, und
- Fig. 19: eine Perspektivansicht des Mähwerks der Fig. 13 in einer Freigabestellung und das Verfahren.

### DETAILLIERTE BESCHREIBUNG DER AUSFÜHRUNGSBEISPIELE

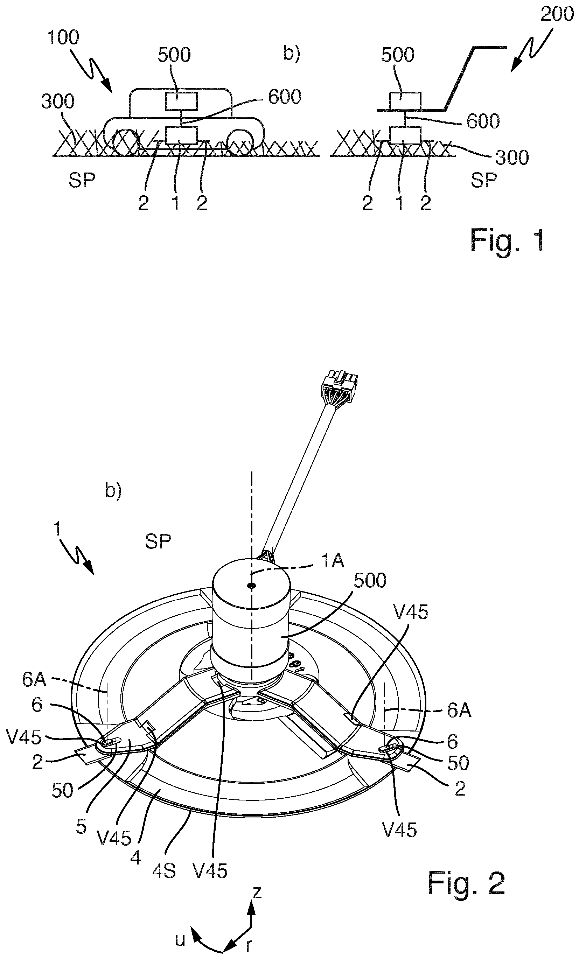

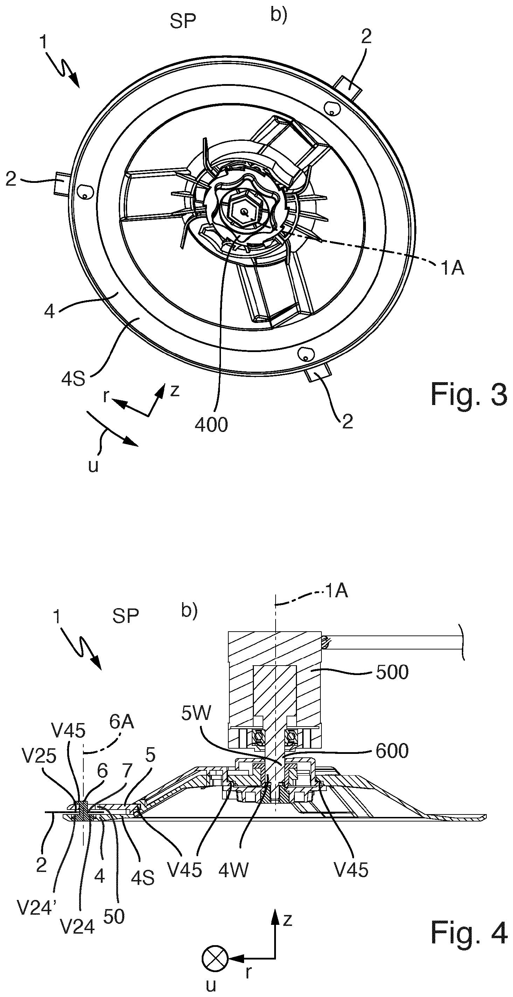

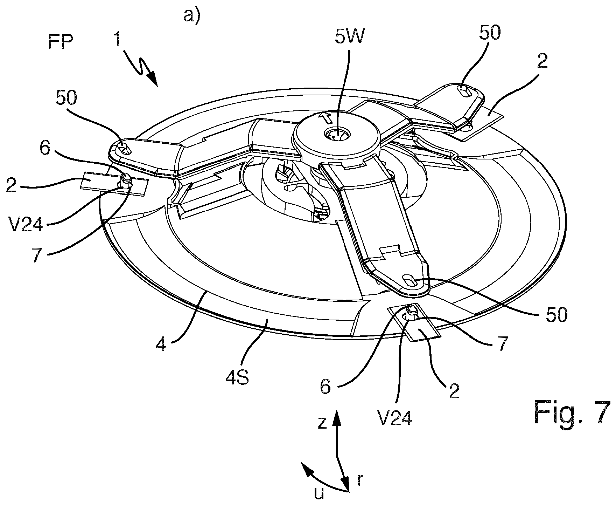

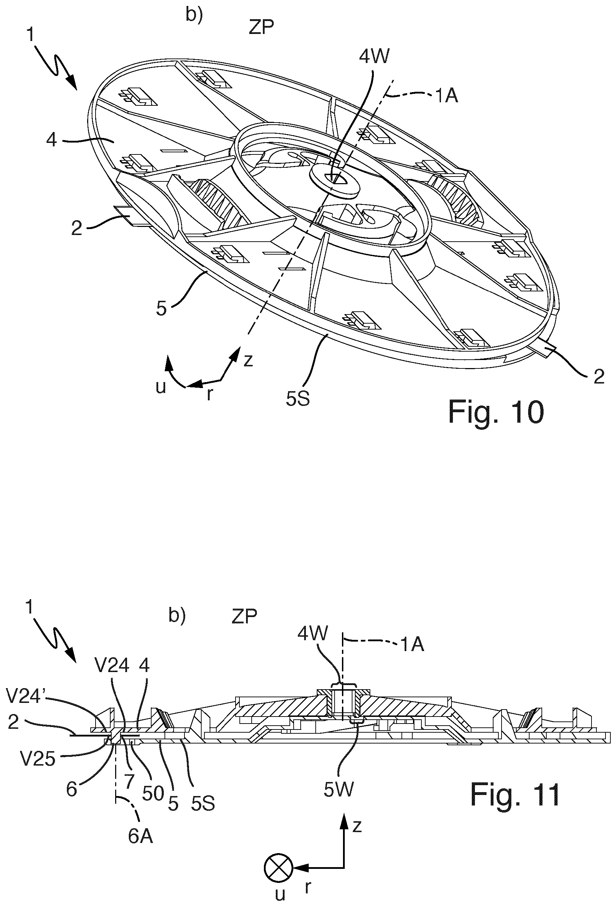

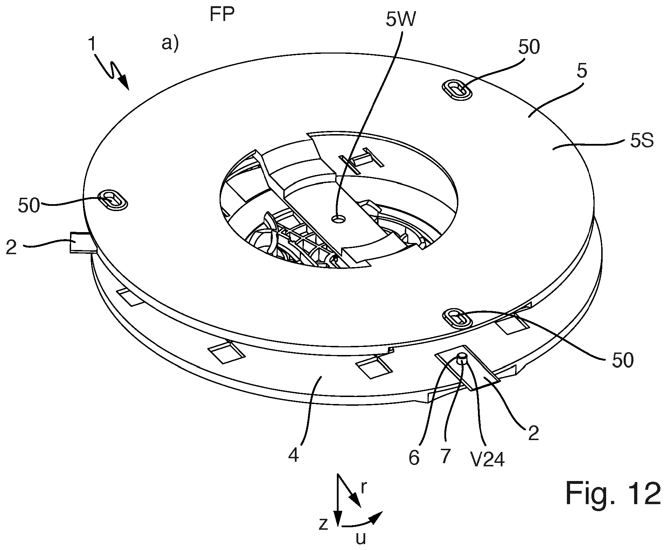

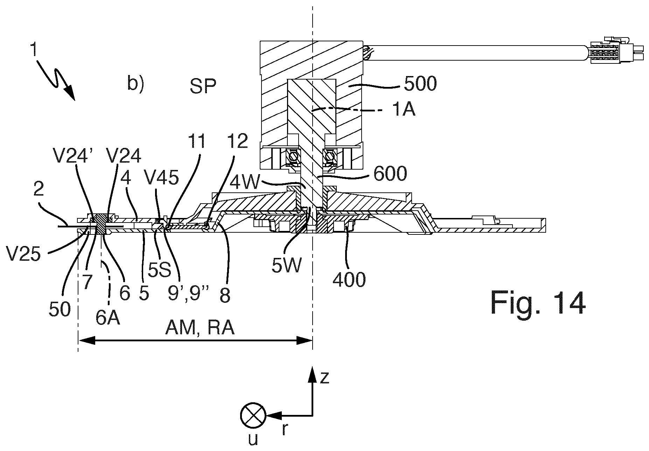

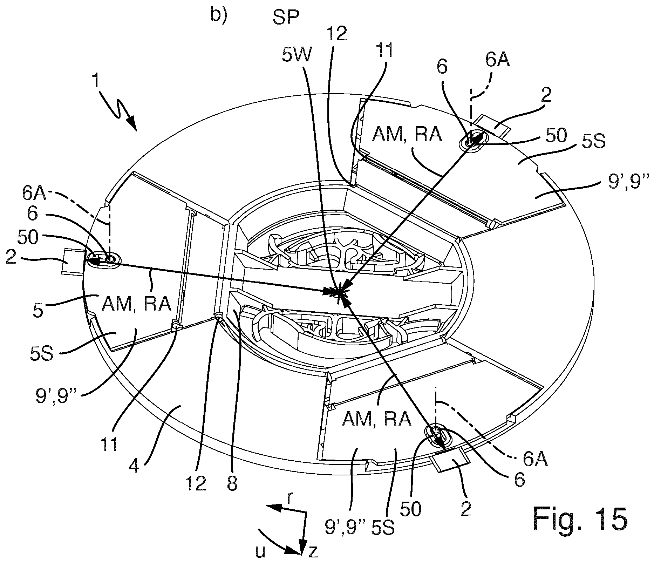

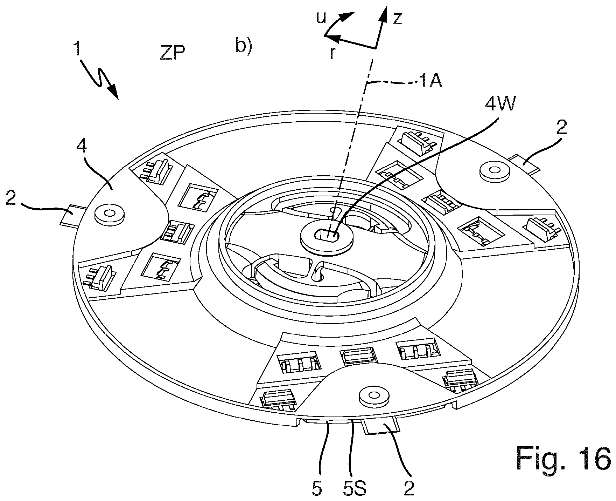

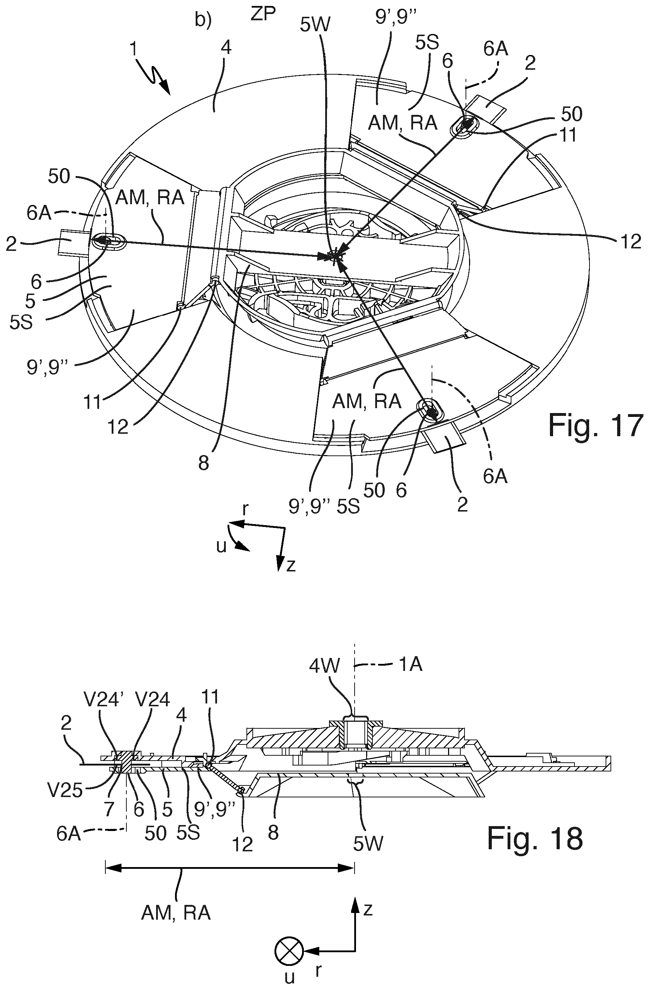

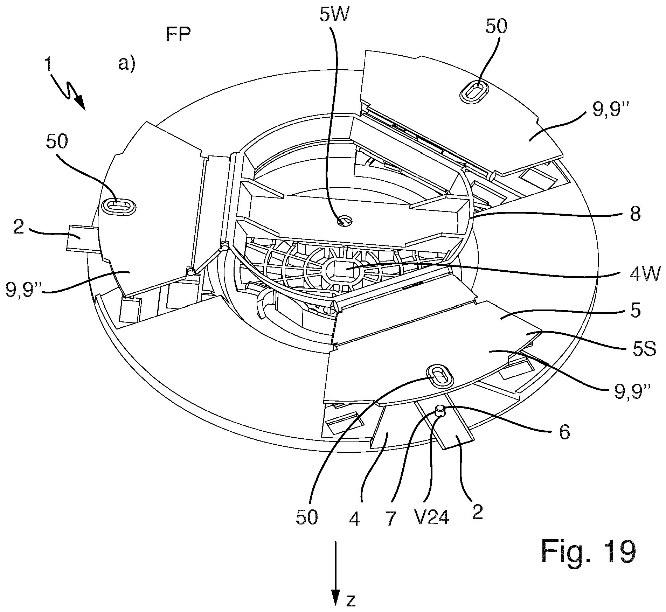

Fig. 1, 2 bis 7, 8 bis 12 und 13 bis 19 zeigen, insbesondere jeweils, ein erfindungsgemäßes Mähwerk 1 für einen Rasenmäher 100 und/oder eine Motorsense 200. Das Mähwerk 1 weist mindestens eine Werkzeugeinrichtung 2, eine Werkzeugverbindungseinrichtung 4 und eine Sicherungseinrichtung 5 auf. Die Werkzeugeinrichtung 2 ist zum Schneiden von Gras 300 ausgebildet, insbesondere schneidet, wie in Fig. 1 gezeigt. Die Werkzeugverbindungseinrichtung 4 ist zur Rotation um eine, in den gezeigten Ausführungsbeispielen in einer bestimmungsgemäßen Betriebsausrichtung etwa vertikalen, Mähwerkrotationsachse 1A des Mähwerks 1 herum ausgebildet, insbesondere rotiert, wie in Fig. 1 gezeigt. Des Weiteren sind die Werkzeugverbindungseinrichtung 4 und die Werkzeugeinrichtung 2 zu einer formschlüssigen Verbindung V24 miteinander zur Sicherung der formschlüssig verbundenen Werkzeugeinrichtung 2 gegen Lösung von der Werkzeugverbindungseinrichtung 4 in, in den gezeigten Ausführungsbeispielen in der bestimmungsgemäßen Betriebsausrichtung etwa horizontalen, Radialrichtung r radial in Bezug auf die Mähwerkrotationsachse 1A ausgebildet, insbesondere formschlüssig verbunden, wie in Fig. 4, 6, 7, 9, 11, 12, 14, 18 und 19 gezeigt. Die Sicherungseinrichtung 5 und die Werkzeugverbindungseinrichtung 4 sind mindestens teilweise relativ zueinander in oder entgegen mindestens teilweiser, in den gezeigten Ausführungsbeispielen nur, Radialrichtung r mindestens abschnittsweise zwischen einer Freigabestellung FP zur Freigabe zur Herstellung und/oder Lösung der formschlüssigen Verbindung V24 und einer Sicherungsstellung SP zur, insbesondere formschlüssigen, Sicherung der formschlüssigen Verbindung V24 gegen Lösung verstellbar ausgebildet, insbesondere in die Freigabestellung FP, wie in Fig. 7, 12 und 19 gezeigt, oder in die Sicherungsstellung SP, wie in Fig. 2 bis 4, 8, 9 und 13 bis 15 gezeigt, verstellt.

Insbesondere kann etwa vertikal eine Abweichung, insbesondere eine Winkelabweichung, in Bezug auf eine, insbesondere die, Vertikale von maximal 10 °, insbesondere maximal 5 °, insbesondere 3 °, bedeuten. Zusätzlich oder alternativ kann etwa horizontal eine Abweichung, insbesondere eine Winkelabweichung, in Bezug auf eine, insbesondere die, Horizontale von maximal 10 °, insbesondere maximal 5 °, insbesondere 3 °, bedeuten.

Fig. 1 zeigt den erfindungsgemäßen Rasenmäher 100, insbesondere in Form eines Roboterrasenmähers, und die erfindungsgemäße Motorsense 200. Der Rasenmäher 100 und die Motorsense 200 weisen, insbesondere jeweils, ein solches Mähwerk 1 wie zuvor beschrieben auf.

Fig. 1, 2 bis 7, 8 bis 12 und 13 bis 19 zeigen, insbesondere jeweils, ein erfindungsgemäßes Verfahren zum Montieren des Mähwerks 1 wie zuvor beschrieben und/oder des Rasenmähers 100 und der Motorsense 200 wie zuvor beschrieben. Das Verfahren weist die Schritte auf: a) Herstellen der formschlüssigen Verbindung V24 der Werkzeugverbindungseinrichtung 4 und der Werkzeugeinrichtung 2 miteinander, wie in Fig. 7, 12 und 19 gezeigt. b) Verstellen der Sicherungseinrichtung 5 und der Werkzeugverbindungseinrichtung 4 mindestens teilweise relativ zueinander zwischen der Freigabestellung FP und der Sicherungsstellung SP, wie in Fig. 1, 2 bis 6, 8 bis 11 und 13 bis 18 gezeigt.

In den gezeigten Ausführungsbeispielen ist das Mähwerk 1 zur Rotation um die Mähwerkrotationsachse 1A herum ausgebildet, insbesondere rotiert, wie in Fig. 1 gezeigt.

Des Weiteren weisen der Rasenmäher 100 und die Motorsense 200, insbesondere jeweils, einen Antriebsmotor 500 zum Antrieb zur Rotation der Werkzeugverbindungseinrichtung 4, insbesondere des Mähwerks 1, um die Mähwerkrotationsachse 1A herum auf, wie in Fig. 1, 2, 4, 8, 9, 13, 14 gezeigt.

Außerdem sind die Werkzeugverbindungseinrichtung 4 und die Werkzeugeinrichtung 2 zu der formschlüssigen Verbindung V24 miteinander zur Sicherung der formschlüssig verbundenen Werkzeugeinrichtung 2 gegen Lösung von der Werkzeugverbindungseinrichtung entgegen Radialrichtung -r und/oder in und/oder entgegen einer, in den gezeigten Ausführungsbeispielen in der bestimmungsgemäßen Betriebsausrichtung etwa horizontalen, Rotationsrichtung u um die Mähwerkrotationsachse 1A herum ausgebildet, insbesondere formschlüssig verbunden.

Im Detail weist das Mähwerk 1 mehrere Werkzeugeinrichtungen 2 auf. Die Werkzeugeinrichtungen 2 sind zum Schneiden von Gras 300 ausgebildet, insbesondere schneiden. Die Werkzeugverbindungseinrichtung 4 und die Werkzeugeinrichtungen 2 sind zu formschlüssigen Verbindungen V24 miteinander zur Sicherung der formschlüssig verbundenen Werkzeugeinrichtungen 2 gegen Lösung von der Werkzeugverbindungseinrichtung in, in den gezeigten Ausführungsbeispielen in der bestimmungsgemäßen Betriebsausrichtung etwa horizontalen, verschiedene Radialrichtungen r radial in Bezug auf die Mähwerkrotationsachse 1A ausgebildet, insbesondere formschlüssig verbunden. Die Sicherungseinrichtung 5 und die Werkzeugverbindungseinrichtung 4 sind mindestens teilweise relativ zueinander zwischen der Freigabestellung FP zur Freigabe zur Herstellung und/oder Lösung der formschlüssigen Verbindungen V24 und der Sicherungsstellung SP zur, insbesondere formschlüssigen, Sicherung der formschlüssigen Verbindungen V24 gegen Lösung verstellbar ausgebildet, insbesondere in die Freigabestellung FP oder in die Sicherungsstellung SP verstellt.

In den gezeigten Ausführungsbeispielen weist das Mähwerk 1 drei Werkzeugeinrichtungen 2 auf. In alternativen Ausführungsbeispielen kann das Mähwerk nur eine einzige Werkzeugeinrichtung, zwei Werkzeugeinrichtungen oder mindestens vier Werkzeugeinrichtungen aufweisen.

Weiter sind in den gezeigten Ausführungsbeispielen die, insbesondere drei, formschlüssig verbundenen Werkzeugeinrichtungen 2 in der Rotationsrichtung u um die Mähwerkrotationsachse 1A herum, insbesondere regelmäßig, insbesondere äquidistant, insbesondere 120 °-äquidistant, angeordnet.

Zudem sind in den gezeigten Ausführungsbeispielen die, insbesondere drei, verschiedenen Radialrichtungen r, insbesondere entsprechend der Anordnung der Werkzeugeinrichtungen 2, regelmäßig, insbesondere äquidistant, insbesondere 120 °-äquidistant, insbesondere um die Mähwerkrotationsachse 1A herum, zueinander.

Des Weiteren weist in den gezeigten Ausführungsbeispielen die Werkzeugverbindungseinrichtung 4 einen Stift 6, insbesondere einer Mehrzahl der Werkzeugeinrichtungen 2 entsprechende Mehrzahl von Stiften 6, auf. Die Werkzeugeinrichtung 2 weist, insbesondere die Werkzeugeinrichtungen 2 weisen jeweils, eine Stiftaufnahme 7, insbesondere in Form eines Durchgangslochs, auf. Der, insbesondere jeweilige, Stift 6 und die, insbesondere jeweilige, Stiftaufnahme 7 sind zur Aufnahme des Stifts 6, insbesondere parallel zu einer, in den gezeigten Ausführungsbeispielen in der bestimmungsgemäßen Betriebsausrichtung etwa vertikalen, Stiftlängsachse 6A des Stifts 6, zu der, insbesondere jeweiligen, formschlüssigen Verbindung V24 ausgebildet, insbesondere aufgenommen. Insbesondere ist die Stiftlängsachse 6A nicht-orthogonal, insbesondere parallel, in Bezug auf die Mähwerkrotationsachse 1A.

In alternativen Ausführungsbeispielen kann die Werkzeugeinrichtung, insbesondere können die Werkzeugeinrichtungen jeweils, einen Stift aufweisen und die Werkzeugverbindungseinrichtung kann eine Stiftaufnahme, insbesondere einer Mehrzahl der Werkzeugeinrichtungen entsprechende Mehrzahl von Stiftaufnahmen, aufweisen.

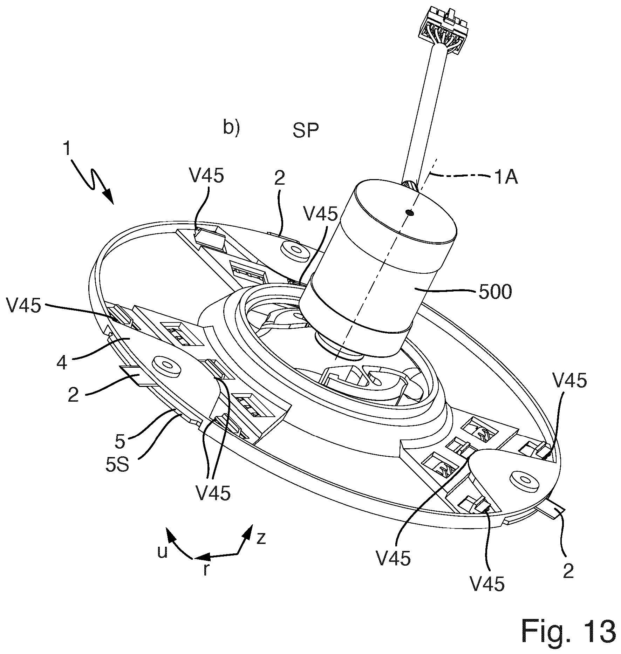

Außerdem weist in den gezeigten Ausführungsbeispielen die Sicherungseinrichtung 5 eine Sicherungs-Stiftaufnahme 50, insbesondere einer Mehrzahl der Werkzeugeinrichtungen 2 entsprechende Mehrzahl von Sicherungs-Stiftaufnahmen 50, insbesondere in Form eines, insbesondere jeweiligen, Durchgangslochs, auf. Der, insbesondere jeweilige, Stift 6 und die, insbesondere jeweilige, Sicherungs-Stiftaufnahme 50 sind zur Aufnahme des Stifts 6, insbesondere parallel zu der Stiftlängsachse 6A des Stifts 6 ausgebildet, in den gezeigten Ausführungsbeispielen mindestens in der Sicherungsstellung SP, in den gezeigten Ausführungsbeispielen und nicht in der Freigabestellung SP, aufgenommen. Insbesondere erstreckt die Sicherungs-Stiftaufnahme 50 sich in mindestens teilweiser, in dem in Fig. 13 bis 19 gezeigten Ausführungsbeispiel nur, Radialrichtung r zur Verstellung mindestens abschnittsweise zwischen der Freigabestellung FP und der Sicherungsstellung SP.

Im Detail sind die Werkzeugverbindungseinrichtung 4 und die, insbesondere jeweilige, Werkzeugeinrichtung 2 zu einer, insbesondere weiteren und/oder jeweiligen, formschlüssigen Verbindung V24' miteinander mindestens in der Sicherungsstellung SP, in den gezeigten Ausführungsbeispielen und in der Freigabestellung FP, zur Sicherung der formschlüssig verbundenen Werkzeugeinrichtung 2 gegen Lösung von der Werkzeugverbindungseinrichtung 4 in einer in, in den gezeigten Ausführungsbeispielen in der bestimmungsgemäßen Betriebsausrichtung etwa vertikalen, ersten in Bezug auf die Mähwerkrotationsachse 1A nicht-orthogonalen, insbesondere parallelen, Axialrichtung z, -z ausgebildet, insbesondere formschlüssig verbunden, wie in Fig. 2 bis 7, 8 bis 12 und 13 bis 19 gezeigt.

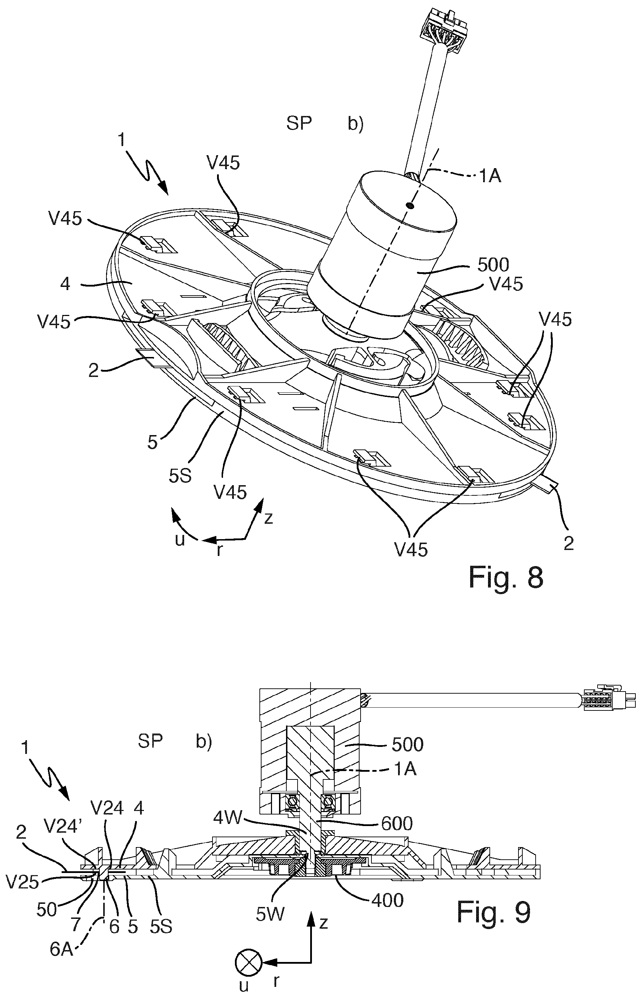

In dem in Fig. 2 bis 7 gezeigten Ausführungsbeispiel ist in der bestimmungsgemäßen Betriebsausrichtung die erste Axialrichtung -z bzw. nach unten. In den in Fig. 8 bis 12 und 13 bis 19 gezeigten Ausführungsbeispielen ist in der bestimmungsgemäßen Betriebsausrichtung die erste Axialrichtung z bzw. nach oben.

Zusätzlich sind die Sicherungseinrichtung 5 und die, insbesondere jeweilige, Werkzeugeinrichtung 2 zu einer, insbesondere jeweiligen, formschlüssigen Verbindung V25 miteinander, in den gezeigten Ausführungsbeispielen mindestens, in der Sicherungsstellung SP, in den gezeigten Ausführungsbeispielen und nicht in der Freigabestellung SP, zur Sicherung der formschlüssig verbundenen Werkzeugeinrichtung 2 gegen Lösung von der Sicherungseinrichtung 5 in einer, in den gezeigten Ausführungsbeispielen in der bestimmungsgemäßen Betriebsausrichtung etwa vertikalen, insbesondere der ersten Axialrichtung z, -z entgegengesetzten, zweiten in Bezug auf die Mähwerkrotationsachse 1A nicht-orthogonalen, insbesondere parallelen, Axialrichtung -z, z ausgebildet, insbesondere formschlüssig verbunden, wie in Fig. 2 bis 6, 8 bis 11 und 13 bis 18 gezeigt.

In dem in Fig. 2 bis 7 gezeigten Ausführungsbeispiel ist in der bestimmungsgemäßen Betriebsausrichtung die zweite Axialrichtung z bzw. nach oben. In den in Fig. 8 bis 12 und 13 bis 19 gezeigten Ausführungsbeispielen ist in der bestimmungsgemäßen Betriebsausrichtung die zweite Axialrichtung -z bzw. nach unten.

Weiter zusätzlich sind die Sicherungseinrichtung 5 und die Werkzeugverbindungseinrichtung 4 zu einer formschlüssigen Verbindung V45, insbesondere mehreren formschlüssigen Verbindungen V45, miteinander in, in den gezeigten Ausführungsbeispielen nur, der Sicherungsstellung SP zur Sicherung gegen Lösung voneinander in, insbesondere mindestens, einer, in den gezeigten Ausführungsbeispielen in der bestimmungsgemäßen Betriebsausrichtung etwa vertikalen, insbesondere der ersten und/oder der zweiten, in Bezug auf die Mähwerkrotationsachse 1A nicht-orthogonalen, insbesondere parallelen, Axialrichtung - z, z ausgebildet, insbesondere formschlüssig verbunden, wie in Fig. 2 bis 4, 8 und 9 und 13 bis 15 gezeigt.

In dem in Fig. 2 bis 7 gezeigten Ausführungsbeispiel ist in der bestimmungsgemäßen Betriebsausrichtung die Sicherungseinrichtung 5 oberhalb der Werkzeugverbindungseinrichtung 4 angeordnet, insbesondere ist in der bestimmungsgemäßen Betriebsausrichtung die Anordnung von unten nach oben: Werkzeugverbindungseinrichtung 4, Werkzeugeinrichtung 2, Sicherungseinrichtung 5. In den in Fig. 8 bis 12 und 13 bis 19 gezeigten Ausführungsbeispielen ist in der bestimmungsgemäßen Betriebsausrichtung die Sicherungseinrichtung 5 unterhalb der Werkzeugverbindungseinrichtung 4 angeordnet, insbesondere ist in der bestimmungsgemäßen Betriebsausrichtung die räumliche Anordnung von unten nach oben: Sicherungseinrichtung 5, Werkzeugeinrichtung 2, Werkzeugverbindungseinrichtung 4.

Zudem sind in den gezeigten Ausführungsbeispielen die, insbesondere jeweilige, formschlüssige Verbindung V45 der Sicherungseinrichtung 5 und der Werkzeugverbindungseinrichtung 4 miteinander in Form einer Rastverbindung, insbesondere mittels eines, insbesondere jeweiligen, Rasthakens.

Insbesondere weist in dem in Fig. 2 bis 7 gezeigten Ausführungsbeispiel der, insbesondere jeweilige, Stift 6 den, insbesondere jeweiligen, Rasthaken auf.

Des Weiteren sind in dem in Fig. 8 bis 12 gezeigten Ausführungsbeispiel zehn Rasthaken vorgesehen.

Außerdem sind in dem in Fig. 8 bis 12 gezeigten Ausführungsbeispiel neun Rasthaken vorgesehen.

Weiter weist in dem in Fig. 2 bis 7 gezeigten Ausführungsbeispiel die Werkzeugverbindungseinrichtung 4 eine, insbesondere kreisförmige, Abdeckscheibe 4S auf. In den in Fig. 8 bis 12 und 13 bis 19 gezeigten Ausführungsbeispielen weist die Sicherungseinrichtung 5 eine, insbesondere kreisförmige, Abdeckscheibe 5S auf. Die Abdeckscheibe 4S, 5S ist zur Rotation um die Mähwerkrotationsachse 1A herum und zur Abdeckung der, insbesondere weiteren, formschlüssigen Verbindung V24, V24', V25 der Werkzeugverbindungseinrichtung 4 und der Werkzeugeinrichtung 2 miteinander und/oder der Sicherungseinrichtung 5 und der Werkzeugeinrichtung 2 miteinander in der in Bezug auf die Mähwerkrotationsachse 1A nicht-orthogonalen, insbesondere parallelen, Axialrichtung z, insbesondere in der bestimmungsgemäßen Betriebsausrichtung nach oben, ausgebildet, insbesondere rotiert und deckt ab.

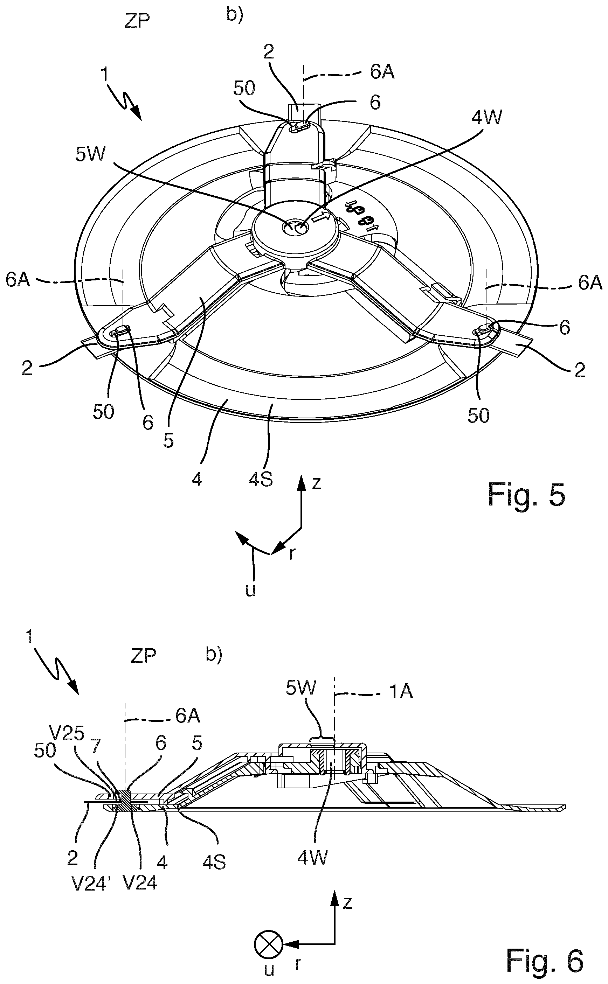

Zudem sind die Sicherungseinrichtung 5 und die Werkzeugverbindungseinrichtung 4 mindestens teilweise relativ zueinander in der in Bezug auf die Mähwerkrotationsachse 1A nicht-orthogonalen, insbesondere parallelen, Axialrichtung z, -z abschnittsweise zwischen der Freigabestellung FP und der Sicherungsstellung SP verstellbar ausgebildet, insbesondere in die Freigabestellung FP oder in die Sicherungsstellung SP verstellt. Insbesondere sind die Sicherungseinrichtung 5 und die Werkzeugverbindungseinrichtung 4 mindestens teilweise relativ zueinander in, in den gezeigten Ausführungsbeispielen nur, der Axialrichtung z, -z in einem ersten Verstellabschnitt zwischen der Freigabestellung FP und einer Zwischenstellung ZP und in oder entgegen, in den gezeigten Ausführungsbeispielen nur, Radialrichtung r, -r in einem, insbesondere von dem ersten Verstellabschnitt verschiedenen, zweiten Verstellabschnitt zwischen der Zwischenstellung ZP und der Sicherungsstellung SP verstellbar ausgebildet, insbesondere in die Freigabestellung FP, wie in Fig. 7, 12 und 19 gezeigt, oder in die Zwischenstellung ZP, wie in Fig. 5, 6, 10, 11 und 16 bis 18 gezeigt, oder in die Sicherungsstellung SP, wie in Fig. 2 bis 4, 8, 9 und 13 bis 15 gezeigt, verstellt.

In den gezeigten Ausführungsbeispielen ist bzw. wird durch die Verstellung von der Freigabestellung FP in die Zwischenstellung ZP die formschlüssige Verbindung V25 der Sicherungseinrichtung 5 und der Werkzeugeinrichtung 2 miteinander hergestellt. Zusätzlich ist bzw. wird durch die Verstellung von der Zwischenstellung ZP in die Freigabestellung FP die formschlüssige Verbindung V45 der Sicherungseinrichtung 5 und der Werkzeugeinrichtung 4 miteinander gelöst. Weiter zusätzlich ist bzw. wird durch die Verstellung von der Zwischenstellung ZP in die Sicherungsstellung SP die formschlüssige Verbindung V45 der Sicherungseinrichtung 5 und der Werkzeugverbindungseinrichtung 4 miteinander hergestellt. Weiter zusätzlich ist bzw. wird durch die Verstellung von der Sicherungsstellung SP in die Zwischenstellung ZP die formschlüssige Verbindung V 45 der Sicherungseinrichtung 5 und der Werkzeugverbindungseinrichtung 4 miteinander gelöst.

Insbesondere kann in den in Fig. 8 bis 12 und 13 bis 19 gezeigten Ausführungsbeispielen das Mähwerk 1 auf den Kopf rotiert werden. Dies ermöglicht, dass die, insbesondere jeweilige, Werkzeugeinrichtung 2 beim Montieren und/oder Demontieren nicht nach unten fallen, sondern auf der Werkzeugverbindungseinrichtung 4 liegen, insbesondere bleiben.

Insbesondere dann, kann die Sicherungseinrichtung 5 von der Werkzeugverbindungseinrichtung 4 von der Zwischenstellung ZP in die Freigabestellung FP nach oben abgehoben sein bzw. werden. Zeitlich danach kann, die insbesondere jeweilige, Werkzeugeinrichtung 2 nach oben von der Werkzeugverbindungseinrichtung 4, insbesondere von dem, insbesondere jeweiligen, Stift 6, abgehoben sein bzw. werden.

Des Weiteren sind in den in Fig. 2 bis 7 und 8 bis 12 gezeigten Ausführungsbeispielen die Sicherungseinrichtung 5 und die Werkzeugverbindungseinrichtung 4 vollständig relativ zueinander in oder entgegen nur einer einzigen Radialrichtung r, -r mindestens abschnittsweise zwischen der Freigabestellung FP und der Sicherungsstellung SP, insbesondere in dem zweiten Verstellabschnitt zwischen der Zwischenstellung ZP und der Sicherungsstellung SP, verstellbar ausgebildet, insbesondere verstellt.

Alternativ sind in dem in Fig. 13 bis 19 gezeigten Ausführungsbeispiel die Sicherungseinrichtung 5 und die Werkzeugverbindungseinrichtung 4 mit mehreren Teilen 9', insbesondere Radialteilen 9", relativ zueinander in oder entgegen verschiedene Radialrichtungen r, -r mindestens abschnittsweise zwischen der Freigabestellung FP und der Sicherungsstellung SP, insbesondere in dem zweiten Verstellabschnitt zwischen der Zwischenstellung ZP und der Sicherungsstellung SP, verstellbar ausgebildet, insbesondere verstellt.

Außerdem ist in dem in Fig. 13 bis 19 gezeigten Ausführungsbeispiel die Sicherungseinrichtung 5 zur Veränderung mindestens einer Abmessung AM, insbesondere eines Radius RA, in Radialrichtung r, insbesondere in verschiedene Radialrichtungen r, zur Verstellung mindestens abschnittsweise zwischen der Freigabestellung FP und der Sicherungsstellung SP, insbesondere in dem zweiten Verstellabschnitt zwischen der Zwischenstellung ZP und der Sicherungsstellung SP, ausgebildet, insbesondere ist die Abmessung AM verändert.

In alternativen Ausführungsbeispielen kann die Werkzeugverbindungseinrichtung zur Veränderung mindestens einer Abmessung, insbesondere eines Radius, in Radialrichtung, insbesondere in verschiedene Radialrichtungen, zur Verstellung mindestens abschnittsweise zwischen der Freigabestellung und der Sicherungsstellung ausgebildet sein.

In dem in Fig. 13 bis 19 gezeigten Ausführungsbeispiel ist die Abmessung AM in der Freigabestellung FP, insbesondere und der Zwischenstellung ZP, klein und in der Sicherungsstellung SP groß.

Im Detail weist in dem in Fig. 13 bis 19 gezeigten Ausführungsbeispiel die Sicherungseinrichtung 5 ein Axialteil 8 und das mindestens eine mit dem Axialteil 8 beweglich verbundene Radialteil 9" auf. Dabei sind das Axialteil 8 in, in dem gezeigten Ausführungsbeispiel nur, der in Bezug auf die Mähwerkrotationsachse 1A nicht-orthogonalen, insbesondere parallelen, Axialrichtung z und das Radialteil 9" mindestens in teilweiser, in dem gezeigten Ausführungsbeispiel nur, insbesondere jeweiliger, Radialrichtung r zur Veränderung der Abmessung AM verstellbar ausgebildet, insbesondere verstellt.

In alternativen Ausführungsbeispielen kann die Werkzeugverbindungseinrichtung ein Axialteil und mindestens ein mit dem Axialteil beweglich verbundenes Radialteil aufweisen.

In dem in Fig. 13 bis 19 gezeigten Ausführungsbeispiel weist die Sicherungseinrichtung 5 drei Radialteile 9" auf. In alternativen Ausführungsbeispielen kann die Sicherungseinrichtung oder die Werkzeugverbindungseinrichtung nur ein einziges Radialteil, zwei Radialteile oder mindestens vier Radialteile aufweisen.

Weiter sind in dem in Fig. 13 bis 19 gezeigten Ausführungsbeispiel die, insbesondere drei, Radialteile 9" in der Rotationsrichtung u um die Mähwerkrotationsachse 1A herum, insbesondere regelmäßig, insbesondere äquidistant, insbesondere 120 °-äquidistant, angeordnet.

Zudem ist das Axialteil 8 auf oder in Verlängerung der Mähwerkrotationsachse 1A, insbesondere angeordnet.

Zusätzlich ist das mindestens eine Radialteil 9" von der Mähwerkrotationsachse 1A und/oder dem Axialteil 8 in, insbesondere jeweiliger, Radialrichtung r nach außen, insbesondere angeordnet.

Insbesondere weist das mindestens eine Radialteil 9" die Sicherungs-Stiftaufnahme 50 auf.

Des Weiteren sind das mindestens eine Radialteil 9" und die Werkzeugeinrichtung 2 zu der formschlüssigen Verbindung V25 miteinander ausgebildet, insbesondere formschlüssig verbunden.

Außerdem sind das mindestens eine Radialteil 9" und die Werkzeugverbindungseinrichtung 4 zu der formschlüssigen Verbindung V45 miteinander ausgebildet, insbesondere formschlüssig verbunden.

Weiter weist das mindestens eine Radialteil 9" die Abdeckscheibe 5S auf, insbesondere das mindestens eine Radialteil 9" ist die Abdeckscheibe 5S.

Zudem weist in dem in Fig. 13 bis 19 gezeigten Ausführungsbeispiel die Sicherungseinrichtung 5 mindestens ein drehbares Gelenk 11, 12 zur Verstellung mindestens abschnittsweise zwischen der Freigabestellung FP und der Sicherungsstellung SP, insbesondere in dem zweiten Verstellabschnitt zwischen der Zwischenstellung ZP und der Sicherungsstellung SP, auf. Insbesondere sind das Axialteil 8 und das Radialteil 9 mittels des mindestens einen Gelenks 11, 12 zur Veränderung der Abmessung AM verstellbeweglich verbunden.

In alternativen Ausführungsbeispielen kann die Werkzeugverbindungseinrichtung mindestens ein drehbares Gelenk zur Verstellung mindestens abschnittsweise zwischen der Freigabestellung und der Sicherungsstellung aufweisen.

In dem in Fig. 13 bis 19 gezeigten Ausführungsbeispiel weist das mindestens eine Gelenk 11, 12, insbesondere jeweils, mindestens einen Gelenkstift auf. In alternativen Ausführungsbeispielen kann das Gelenk ein Filmscharnier sein.

Weiter weist in dem in Fig. 13 bis 19 gezeigten Ausführungsbeispiel die Sicherungseinrichtung 5 pro Radialteil 9" zwei drehbare Gelenke 11, 12, insbesondere mittels eines Zwischenteils mechanisch verbunden, auf.

Zudem ist das mindestens eine Gelenk 11, 12 zur Verstellung des Radialteils 9" durch die Verstellung des Axialteils 8 ausgebildet, insbesondere verstellt.

Des Weiteren kann die Sicherungseinrichtung 5 des in Fig. 13 bis 19 gezeigten Ausführungsbeispiels als Tellerfederstern bezeichnet werden.

Außerdem erstrecken/erstreckt die Werkzeugverbindungseinrichtung 4 und/oder die Sicherungseinrichtung 5, in den in Fig. 2 bis 7 und 8 bis 12 gezeigten Ausführungsbeispielen die Abdeckscheibe 4S, 5S und in dem in Fig. 13 bis 19 gezeigten Ausführungsbeispiel das Axialteil 8, sich mindestens in der Sicherungsstellung SP von der Mähwerkrotationsachse 1A in Radialrichtung r weg.

Zusätzlich umschließen/umschließt die Werkzeugverbindungseinrichtung 4 und/oder die Sicherungseinrichtung 5, in den in Fig. 2 bis 7 und 8 bis 12 gezeigten Ausführungsbeispielen die Abdeckscheibe 4S, 5S und in dem in Fig. 13 bis 19 gezeigten Ausführungsbeispiel das Axialteil 8, mindestens in der Sicherungsstellung SP die Mähwerkrotationsachse 1A in der Rotationsrichtung u um die Mähwerkrotationsachse 1A herum vollständig.

Weiter weist die Werkzeugverbindungseinrichtung 4, in dem in Fig. 2 bis 7 gezeigten Ausführungsbeispiel die Abdeckscheibe 4S, eine erste Wellenaufnahme 4W zur Aufnahme einer Rotationswelle 600, insbesondere in der in Bezug auf die Mähwerkrotationsachse 1A nicht-orthogonalen, insbesondere parallelen, Axialrichtung -z, auf, insbesondere hat die erste Wellenaufnahme 4W die Rotationswelle 600 aufgenommen, wie in Fig. 4, 9 und 14 gezeigt. Die Sicherungseinrichtung 5, in dem in Fig. 8 bis 12 gezeigten Ausführungsbeispielen die Abdeckscheibe 5S und in dem in Fig. 13 bis 19 gezeigten Ausführungsbeispiel das Axialteil 8, weist eine zweite Wellenaufnahme 5W zur Aufnahme der Rotationswelle 600, insbesondere in der Axialrichtung -z, auf, insbesondere hat die zweite Wellenaufnahme 5W die Rotationswelle 600 aufgenommen, wie in Fig. 4, 9 und 14 gezeigt. Die erste Wellenaufnahme 4W und die zweite Wellenaufnahme 5W sind relativ zueinander, in den in Fig. 2 bis 7 und 8 bis 12 gezeigten Ausführungsbeispielen in oder entgegen Radialrichtung r, -r oder in dem in Fig. 13 bis 19 gezeigten Ausführungsbeispiel in oder entgegen der Axialrichtung z, -z, mindestens abschnittsweise zwischen der Freigabestellung FP und der Sicherungsstellung SP, insbesondere in dem zweiten Verstellabschnitt zwischen der Zwischenstellung ZP und der Sicherungsstellung SP, verstellbar ausgebildet, insbesondere verstellt.

Zudem weisen/weist der Rasenmäher 100 und die Motorsense 200, insbesondere jeweils, eine solche Rotationswelle 600 und ein Befestigungselement 400 auf. Die Rotationswelle 600 und das Mähwerk 1 sind zur Befestigung des Mähwerks 1, insbesondere nur, in der Sicherungsstellung SP an der Rotationswelle 600 mittels des Befestigungselements 400, insbesondere zur Aufnahme der Rotationswelle 600, ausgebildet, insbesondere ist das Mähwerk 1 in der Sicherungsstellung SP an der, insbesondere aufgenommenen, Rotationswelle 600 mittels des Befestigungselements 400 befestigt, wie in Fig. 3, 4, 9 und 14 gezeigt. Die, insbesondere aufgenommene, Rotationswelle 600, in den in Fig. 2 bis 7 und 8 bis 12 gezeigten Ausführungsbeispielen, und/oder das Befestigungselement 400, in den in Fig. 8 bis 12 und 13 bis 19 gezeigten Ausführungsbeispielen, und das befestigte Mähwerk 1 sind zur, insbesondere formschlüssigen, Sicherung gegen Verstellung, insbesondere der ersten Wellenaufnahme 4W und der zweiten Wellenaufnahme 5W, in die Freigabestellung FP, insbesondere und die Zwischenstellung ZP, ausgebildet, insbesondere sichern.

Insbesondere sind in dem in Fig. 8 bis 12 gezeigten Ausführungsbeispiel das Befestigungselement 400 und das befestigte Mähwerk 1 zur Sicherung gegen, insbesondere relative, Verstellung, insbesondere des Befestigungselements 400 und der Sicherungseinrichtung 5, insbesondere zueinander, in oder entgegen Radialrichtung r, -r in die Freigabestellung FP, insbesondere und die Zwischenstellung ZP, ausgebildet, insbesondere sichern, wie in Fig. 9 gezeigt.

In den gezeigten Ausführungsbeispielen ist die Rotationswelle 600 zur Rotation um die Mähwerkrotationsachse 1A herum ausgebildet, insbesondere rotiert.

Des Weiteren weisen der Rasenmäher 100 und die Motorsense 200, insbesondere jeweils, den Antriebsmotor 500 zum Antrieb zur Rotation der Rotationswelle 600 um die Mähwerkrotationsachse 1A herum auf.

Außerdem ist das Befestigungselement 400 in Form einer Mutter. In alternativen Ausführungsbeispielen braucht oder kann das Befestigungselement nicht in Form einer Mutter sein.

Wie die gezeigten und zuvor beschriebenen Ausführungsbeispiele deutlich machen, stellt die Erfindung ein Mähwerk für einen Rasenmäher und/oder eine Motorsense, einen Rasenmäher und/oder eine Motorsense aufweisend ein solches Mähwerk und/oder ein Verfahren zum Montieren eines solchen Mähwerks und/oder eines solchen Rasenmähers und/oder einer solchen Motorsense bereit, das und/oder der und/oder die jeweils verbesserte Eigenschaften aufweist.

## Patentansprüche

1. Mähwerk (1) für einen Rasenmäher (100) und/oder eine Motorsense (200), wobei das Mähwerk (1) aufweist:
- mindestens eine Werkzeugeinrichtung (2), wobei die Werkzeugeinrichtung (2) zum Schneiden von Gras (300) ausgebildet ist,
- eine Werkzeugverbindungseinrichtung (4), wobei die Werkzeugverbindungseinrichtung (4) zur Rotation um eine Mähwerkrotationsachse (1A) des Mähwerks (1) herum ausgebildet ist, und wobei die Werkzeugverbindungseinrichtung (4) und die Werkzeugeinrichtung (2) zu einer formschlüssigen Verbindung (V24) miteinander zur Sicherung der formschlüssig verbundenen Werkzeugeinrichtung (2) gegen Lösung von der Werkzeugverbindungseinrichtung (4) in Radialrichtung (r) radial in Bezug auf die Mähwerkrotationsachse (1A) ausgebildet sind, und
- eine Sicherungseinrichtung (5), wobei die Sicherungseinrichtung (5) und die Werkzeugverbindungseinrichtung (4) mindestens teilweise relativ zueinander in oder entgegen mindestens teilweiser Radialrichtung (r, -r) mindestens abschnittsweise zwischen einer Freigabestellung (FP) zur Freigabe zur Herstellung und/oder Lösung der formschlüssigen Verbindung (V24) und einer Sicherungsstellung (SP) zur Sicherung der formschlüssigen Verbindung (V24) gegen Lösung verstellbar ausgebildet sind,
- wobei die Sicherungseinrichtung (5) und die Werkzeugverbindungseinrichtung (4) mindestens teilweise relativ zueinander in einer in Bezug auf die Mähwerkrotationsachse (1A) nicht-orthogonalen Axialrichtung (z, -z) abschnittsweise zwischen der Freigabestellung (FP) und der Sicherungsstellung (SP) verstellbar ausgebildet sind,
- **dadurch gekennzeichnet, dass** die Sicherungseinrichtung (5) und die Werkzeugverbindungseinrichtung (4) mindestens teilweise relativ zueinander in der Axialrichtung (z, -z) in einem ersten Verstellabschnitt zwischen der Freigabestellung (FP) und einer Zwischenstellung (ZP) und in oder entgegen Radialrichtung (r, -r) in einem zweiten Verstellabschnitt zwischen der Zwischenstellung (ZP) und der Sicherungsstellung (SP) verstellbar ausgebildet sind.

2. Mähwerk (1) nach Anspruch 1,
- wobei die Werkzeugeinrichtung oder die Werkzeugverbindungseinrichtung (4) einen Stift (6) aufweist, und wobei die Werkzeugverbindungseinrichtung oder die Werkzeugeinrichtung (2) eine Stiftaufnahme (7) aufweist, wobei der Stift (6) und die Stiftaufnahme (7) zur Aufnahme des Stifts (6) zu der formschlüssigen Verbindung (V24) ausgebildet sind.

3. Mähwerk (1) nach einem der vorhergehenden Ansprüche,
- wobei die Werkzeugverbindungseinrichtung (4) und die Werkzeugeinrichtung (2) zu einer formschlüssigen Verbindung (V24') miteinander mindestens in der Sicherungsstellung (SP) zur Sicherung der formschlüssig verbundenen Werkzeugeinrichtung (2) gegen Lösung von der Werkzeugverbindungseinrichtung (4) in einer ersten in Bezug auf die Mähwerkrotationsachse (1A) nicht-orthogonalen Axialrichtung (z, -z) ausgebildet sind, und/oder
- wobei die Sicherungseinrichtung (5) und die Werkzeugeinrichtung (2) zu einer formschlüssigen Verbindung (V25) miteinander in der Sicherungsstellung (SP) zur Sicherung der formschlüssig verbundenen Werkzeugeinrichtung (2) gegen Lösung von der Sicherungseinrichtung (5) in einer zweiten in Bezug auf die Mähwerkrotationsachse (1A) nicht-orthogonalen Axialrichtung (-z, z) ausgebildet sind, und/oder
- wobei die Sicherungseinrichtung (5) und die Werkzeugverbindungseinrichtung (4) zu einer formschlüssigen Verbindung (V45) miteinander in der Sicherungsstellung (SP) zur Sicherung gegen Lösung voneinander in einer in Bezug auf die Mähwerkrotationsachse (1A) nicht-orthogonalen Axialrichtung (-z, z) ausgebildet sind.

4. Mähwerk (1) nach einem der vorhergehenden Ansprüche,
- wobei die Werkzeugverbindungseinrichtung (4) oder die Sicherungseinrichtung (5) eine Abdeckscheibe (4S, 5S) aufweist, wobei die Abdeckscheibe (4S, 5S) zur Rotation um die Mähwerkrotationsachse (1A) herum und zur Abdeckung der formschlüssigen Verbindung (V24, V24', V25) der Werkzeugverbindungseinrichtung (4) und der Werkzeugeinrichtung (2) miteinander und/oder der Sicherungseinrichtung (5) und der Werkzeugeinrichtung (2) miteinander in einer in Bezug auf die Mähwerkrotationsachse (1A) nicht-orthogonalen Axialrichtung (z) ausgebildet ist.

5. Mähwerk (1) nach einem der vorhergehenden Ansprüche,
- wobei das Mähwerk (1) mehrere Werkzeugeinrichtungen (2) aufweist, wobei die Werkzeugeinrichtungen (2) zum Schneiden von Gras (300) ausgebildet sind,
- wobei die Werkzeugverbindungseinrichtung (4) und die Werkzeugeinrichtungen (2) zu formschlüssigen Verbindungen (V24) miteinander zur Sicherung der formschlüssig verbundenen Werkzeugeinrichtungen (2) gegen Lösung von der Werkzeugverbindungseinrichtung (4) in verschiedene Radialrichtungen (r) radial in Bezug auf die Mähwerkrotationsachse (1A) ausgebildet sind, und
- wobei die Sicherungseinrichtung (5) und die Werkzeugverbindungseinrichtung (4) mindestens teilweise relativ zueinander zwischen der Freigabestellung (FP) zur Freigabe zur Herstellung und/oder Lösung der formschlüssigen Verbindungen (V24) und der Sicherungsstellung (SP) zur Sicherung der formschlüssigen Verbindungen (V24) gegen Lösung verstellbar ausgebildet sind.

6. Mähwerk (1) nach Anspruch 5,
- wobei die Sicherungseinrichtung (5) und die Werkzeugverbindungseinrichtung (4) vollständig relativ zueinander in oder entgegen nur einer einzigen Radialrichtung (r, -r) mindestens abschnittsweise zwischen der Freigabestellung (FP) und der Sicherungsstellung (SP) verstellbar ausgebildet sind, oder
- wobei die Sicherungseinrichtung (5) und die Werkzeugverbindungseinrichtung (4) mit mehreren Teilen (9') relativ zueinander in oder entgegen verschiedene Radialrichtungen (r, -r) mindestens abschnittsweise zwischen der Freigabestellung (FP) und der Sicherungsstellung (SP) verstellbar ausgebildet sind.

7. Mähwerk (1) nach einem der vorhergehenden Ansprüche,
- wobei die Sicherungseinrichtung (5) oder die Werkzeugverbindungseinrichtung zur Veränderung mindestens einer Abmessung (AM) in Radialrichtung (r) zur Verstellung mindestens abschnittsweise zwischen der Freigabestellung (FP) und der Sicherungsstellung (SP) ausgebildet ist.

8. Mähwerk (1) nach Anspruch 7,
- wobei die Sicherungseinrichtung (5) oder die Werkzeugverbindungseinrichtung ein Axialteil (8) und mindestens ein mit dem Axialteil (8) beweglich verbundenes Radialteil (9") aufweist, wobei das Axialteil (8) in einer in Bezug auf die Mähwerkrotationsachse (1A) nicht-orthogonalen Axialrichtung (z) und das Radialteil (9") in mindestens teilweiser Radialrichtung (r) zur Veränderung der Abmessung (AM) verstellbar ausgebildet sind.

9. Mähwerk (1) nach einem der vorhergehenden Ansprüche,
- wobei die Sicherungseinrichtung (5) oder die Werkzeugverbindungseinrichtung mindestens ein drehbares Gelenk (11, 12) zur Verstellung mindestens abschnittsweise zwischen der Freigabestellung (FP) und der Sicherungsstellung (SP) aufweist.

10. Mähwerk (1) nach einem der vorhergehenden Ansprüche,
- wobei die Werkzeugverbindungseinrichtung (4) und/oder die Sicherungseinrichtung (5) sich mindestens in der Sicherungsstellung (SP) von der Mähwerkrotationsachse (1A) in Radialrichtung (r) wegerstrecken/wegerstreckt, und/oder
- wobei die Werkzeugverbindungseinrichtung (4) und/oder die Sicherungseinrichtung (5) mindestens in der Sicherungsstellung (SP) die Mähwerkrotationsachse (1A) in einer Rotationsrichtung (u) um die Mähwerkrotationsachse (1A) herum vollständig umschließen/umschließt.

11. Mähwerk (1) nach einem der vorhergehenden Ansprüche,
- wobei die Werkzeugverbindungseinrichtung (4) eine erste Wellenaufnahme (4W) zur Aufnahme einer Rotationswelle (600) aufweist,
- wobei die Sicherungseinrichtung (5) eine zweite Wellenaufnahme (5W) zur Aufnahme der Rotationswelle (600) aufweist, und
- wobei die erste Wellenaufnahme (4W) und die zweite Wellenaufnahme (5W) relativ zueinander mindestens abschnittsweise zwischen der Freigabestellung (FP) und der Sicherungsstellung (SP) verstellbar ausgebildet sind.

12. Rasenmäher (100) und/oder Motorsense (200), wobei der Rasenmäher (100) und/oder die Motorsense (200) aufweist:
- ein Mähwerk (1) nach einem der vorhergehenden Ansprüche.

13. Rasenmäher (100) und/oder Motorsense (200) nach Anspruch 12, wobei der Rasenmäher (100) und/oder die Motorsense (200) aufweist:
- eine Rotationswelle (600), und
- ein Befestigungselement (400),
- wobei die Rotationswelle (600) und das Mähwerk (1) zur Befestigung des Mähwerks (1) in der Sicherungsstellung (SP) an der Rotationswelle (600) mittels des Befestigungselements (400) ausgebildet sind, und
- wobei die Rotationswelle (600) und/oder das Befestigungselement (400) und das befestigte Mähwerk (1) zur Sicherung gegen Verstellung in die Freigabestellung (FP) ausgebildet sind.

14. Verfahren zum Montieren eines Mähwerks (1) nach einem der Ansprüche 1 bis 11 und/oder eines Rasenmähers (100) und/oder einer Motorsense (200) nach Anspruch 12 oder 13, wobei das Verfahren die Schritte aufweist:
a) Herstellen der formschlüssigen Verbindung (V24) der Werkzeugverbindungseinrichtung (4) und der Werkzeugeinrichtung (2) miteinander, und
b) Verstellen der Sicherungseinrichtung (5) und der Werkzeugverbindungseinrichtung (4) mindestens teilweise relativ zueinander zwischen der Freigabestellung (FP) und der Sicherungsstellung (SP).

## Claims

1. Cutting mechanism (1) for a lawnmower (100) and/or a motor scythe (200), wherein the cutting mechanism (1) has:
- at least one tool device (2), wherein the tool device (2) is designed for cutting grass (300),
- a tool connecting device (4), wherein the tool connecting device (4) is designed for rotation around a cutting mechanism rotation axis (1A) of the cutting mechanism (1), and wherein the tool connecting device (4) and the tool device (2) are designed to form a positive connection (V24) to one another in order to secure the positively connected tool device (2) against being released from the tool connecting device (4) radially in a radial direction (r) with respect to the cutting mechanism rotation axis (1A), and
- a securing device (5), wherein the securing device (5) and the tool connecting device (4) are designed to be at least partially adjustable relative to one another in or counter to an at least partial radial direction (r, -r) at least section-by-section between an enable position (FP) for enabling the establishment and/or release of the positive connection (V24) and a securing position (SP) for securing the positive connection (V24) against release,
- wherein the securing device (5) and the tool connecting device (4) are designed to be at least partially adjustable relative to one another in an axial direction (z, -z) non-orthogonal with respect to the cutting mechanism rotation axis (1A), section-by-section between the enable position (FP) and the securing position (SP),
- **characterized in that** the securing device (5) and the tool connecting device (4) are designed to be at least partially adjustable relative to one another in the axial direction (z, -z) in a first adjusting section between the enable position (FP) and an intermediate position (ZP), and in or counter to a radial direction (r, -r) in a second adjusting section between the intermediate position (ZP) and the securing position (SP).

2. Cutting mechanism (1) according to Claim 1,
- wherein the tool device or the tool connecting device (4) has a pin (6), and wherein the tool connecting device or the tool device (2) has a pin receptacle (7), wherein the pin (6) and the pin receptacle (7) are designed for the reception of the pin (6) to form the positive connection (V24).

3. Cutting mechanism (1) according to any of the preceding claims,
- wherein the tool connecting device (4) and the tool device (2) are designed to form a positive connection (V24') to one another, at least in the securing position (SP) in order to secure the positively connected tool device (2) against release from the tool connecting device (4) in a first axial direction (z, -z) non-orthogonal with respect to the cutting mechanism rotation axis (1A), and/or
- wherein the securing device (5) and the tool device (2) are designed to form a positive connection (V25) to one another in the securing position (SP) in order to secure the positively connected tool device (2) against release from the securing device (5) in a second axial direction (-z, z) non-orthogonal with respect to the cutting mechanism rotation axis (1A), and/or
- wherein the securing device (5) and the tool connecting device (4) are designed to form a positive connection (V45) to one another in the securing position (SP) in order to secure them against release from one another in an axial direction (-z, z) non-orthogonal with respect to the cutting mechanism rotation axis (1A).

4. Cutting mechanism (1) according to any of the preceding claims,
- wherein the tool connecting device (4) or the securing device (5) has a cover disc (4S, 5S), wherein the cover disc (4S, 5S) is designed for rotation around the cutting mechanism rotation axis (1A) and for covering the positive connection (V24, V24', V25) of the tool connecting device (4) and the tool device (2) to one another and/or of the securing device (5) and the tool device (2) to one another in an axial direction (z) non-orthogonal with respect to the cutting mechanism rotation axis (1A).

5. Cutting mechanism (1) according to any of the preceding claims,
- wherein the cutting mechanism (1) has a plurality of tool devices (2), wherein the tool devices (2) are designed for cutting grass (300),
- wherein the tool connecting device (4) and the tool devices (2) are designed to form positive connections (V24) to one another in order to secure the positively connected tool devices (2) against being released from the tool connecting device (4) radially in different radial directions (r) with respect to the cutting mechanism rotation axis (1A), and
- wherein the securing device (5) and the tool connecting device (4) are designed to be at least partially adjustable relative to one another between the enable position (FP) for enabling the establishment and/or release of the positive connections (V24) and the securing position (SP) for securing the positive connections (V24) against release.

6. Cutting mechanism (1) according to Claim 5,
- wherein the securing device (5) and the tool connecting device (4) are designed to be fully adjustable relative to one another in or counter to only a single radial direction (r -r), at least section-by-section, between the enable position (FP) and the securing position (SP), or
- wherein the securing device (5) and the tool connecting device (4) are designed to be adjustable with a plurality of parts (9') relative to one another in or counter to different radial directions (r -r), at least section-by-section, between the enable position (FP) and the securing position (SP).

7. Cutting mechanism (1) according to any of the preceding claims,
- wherein the securing device (5) or the tool connecting device is designed for changing at least one dimension (AM) in a radial direction (r) for adjustment, at least section-by-section, between the enable position (FP) and the securing position (SP).

8. Cutting mechanism (1) according to Claim 7,
- wherein the securing device (5) or the tool connecting device has an axial part (8) and at least one radial part (9") movably connected to the axial part (8), wherein the axial part (8) is designed to be adjustable in an axial direction (z) non-orthogonal with respect to the cutting mechanism rotation axis (1A), and the radial part (9") is designed to be adjustable in an at least partial radial direction (r) to change the dimension (AM).

9. Cutting mechanism (1) according to any of the preceding claims,
- wherein the securing device (5) or the tool connecting device has at least one rotatable joint (11, 12) for adjustment at least section-by-section between the enable position (FP) and the securing position (SP).

10. Cutting mechanism (1) according to any of the preceding claims,
- wherein the tool connecting device (4) and/or the securing device (5) extend/extends away from the cutting mechanism rotation axis (1A) in a radial direction (r), at least in the securing position (SP), and/or
- wherein the tool connecting device (4) and/or the securing device (5) completely surround/surrounds the cutting mechanism rotation axis (1A) in a direction of rotation (u) around the cutting mechanism rotation axis (1A), at least in the securing position (SP).

11. Cutting mechanism (1) according to any of the preceding claims,
- wherein the tool connecting device (4) comprises a first shaft receptacle (4W) for receiving a rotation shaft (600),
- wherein the securing device (5) comprises a second shaft receptacle (5W) for receiving the rotation shaft (600), and
- wherein the first shaft receptacle (4W) and the second shaft receptacle (5W) are designed to be adjustable relative to one another at least section-by-section, between the enable position (FP) and the securing position (SP).

12. Lawnmower (100) and/or motor scythe (200), wherein the lawnmower (100) and/or the motor scythe (200) have/has:
- a cutting mechanism (1) according to any of the preceding claims.

13. Lawnmower (100) and/or motor scythe (200) according to Claim 12, wherein the lawnmower (100) and/or the motor scythe (200) have/has:
- a rotation shaft (600), and
- a fastening element (400),
- wherein the rotation shaft (600) and the cutting mechanism (1) are designed for the fastening of the cutting mechanism (1) on the rotation shaft (600) in the securing position (SP) by means of the fastening element (400), and
- wherein the rotation shaft (600) and/or the fastening element (400) and the fastened cutting mechanism (1) are designed for securing against adjustment into the enable position (FP).

14. Method for assembling a cutting mechanism (1) according to any of Claims 1 to 11 and/or a lawnmower (100) and/or a motor scythe (200) according to Claim 12 or 13, wherein the method has the following steps:
a) establishing the positive connection (V24) of the tool connecting device (4) and of the tool device (2) to one another, and
b) adjusting the securing device (5) and the tool connecting device (4) at least partially relative to one another between the enable position (FP) and the securing position (SP).

## Revendications

1. Mécanisme de fauchage (1) pour une tondeuse à gazon (100) et/ou une débroussailleuse (200), le mécanisme de fauchage (1) comportant :
- au moins un dispositif d'outil (2), le dispositif d'outil (2) étant réalisé pour couper l'herbe (300),
- un dispositif de raccordement d'outil (4), le dispositif de raccordement d'outil (4) étant réalisé pour tourner autour d'un axe de rotation (1A) du mécanisme de fauchage (1), et le dispositif de raccordement d'outil (4) et le dispositif d'outil (2) étant réalisés pour un raccordement à complémentarité de forme (V24) l'un à l'autre pour bloquer le dispositif d'outil (2) raccordé par complémentarité de forme et l'empêcher de se détacher du dispositif de raccordement d'outil (4) dans la direction radiale (r) radialement par rapport à l'axe de rotation (1A) du mécanisme de fauchage, et
- un dispositif de blocage (5), le dispositif de blocage (5) et le dispositif de raccordement d'outil (4) étant réalisés de manière ajustable au moins en partie l'un par rapport à l'autre au moins par endroits entre une position de déblocage (FP) de déblocage pour établir et/ou détacher le raccordement à complémentarité de forme (V24) et une position de blocage (SP) pour bloquer le raccordement à complémentarité de forme (V24) et l'empêcher de se détacher dans au moins une direction radiale partielle (r, -r) ou à l'opposé de celle-ci,
- le dispositif de blocage (5) et le dispositif de raccordement d'outil (4) étant réalisés de manière ajustable au moins en partie l'un par rapport à l'autre par endroits entre la position de déblocage (FP) et la position de blocage (SP) dans une direction axiale (z, - z) non orthogonale par rapport à l'axe de rotation (1A) du mécanisme de fauchage,
- **caractérisé en ce que** le dispositif de blocage (5) et le dispositif de raccordement d'outil (4) sont réalisés de manière ajustable au moins en partie l'un par rapport à l'autre entre la position de déblocage (FP) et une position intermédiaire (ZP) dans une première section d'ajustement dans la direction axiale (z, -z) et entre la position intermédiaire (ZP) et la position de blocage (SP) dans une deuxième section d'ajustement dans la direction radiale (r, -r) ou à l'opposé de celle-ci.

2. Mécanisme de fauchage (1) selon la revendication 1,
- le dispositif d'outil ou le dispositif de raccordement d'outil (4) comportant une tige (6), le dispositif de raccordement d'outil ou le dispositif d'outil (2) comportant un logement (7) de tige, la tige (6) et le logement (7) de tige destiné à loger la tige (6) étant réalisés pour le raccordement à complémentarité de forme (V24).

3. Mécanisme de fauchage (1) selon l'une des revendications précédentes,
- le dispositif de raccordement d'outil (4) et le dispositif d'outil (2) étant réalisés pour un raccordement à complémentarité de forme (V24') l'un à l'autre au moins dans la position de blocage (SP) pour bloquer le dispositif d'outil (2) raccordé par complémentarité de forme et l'empêcher de se détacher du dispositif de raccordement d'outil (4) dans une direction axiale (z, -z) non orthogonale par rapport à l'axe de rotation (1A) du mécanisme de fauchage, et/ou
- le dispositif de blocage (5) et le dispositif d'outil (2) étant réalisés pour un raccordement à complémentarité de forme (V25) l'un à l'autre dans la position de blocage (SP) pour bloquer le dispositif d'outil (2) raccordé par complémentarité de forme et l'empêcher de se détacher du dispositif de blocage (5) dans une deuxième direction axiale (-z, z) non orthogonale par rapport à l'axe de rotation (1A) du mécanisme de fauchage, et/ou
- le dispositif de blocage (5) et le dispositif de raccordement d'outil (4) étant réalisés pour un raccordement à complémentarité de forme (V45) l'un à l'autre dans la position de blocage (SP) pour les bloquer et les empêcher de se détacher l'un de l'autre dans une direction axiale (-z, z) non orthogonale par rapport à l'axe de rotation (1A) du mécanisme de fauchage.

4. Mécanisme de fauchage (1) selon l'une des revendications précédentes,
- le dispositif de raccordement d'outil (4) ou le dispositif de blocage (5) comportant un disque de recouvrement (4S, 5S), le disque de recouvrement (4S, 5S) étant réalisé pour tourner autour de l'axe de rotation (1A) du mécanisme de fauchage et pour recouvrir le raccordement à complémentarité de forme (V24, V24', V25) du dispositif de raccordement d'outil (4) et du dispositif d'outil (2) l'un à l'autre et/ou du dispositif de blocage (5) et du dispositif d'outil (2) l'un à l'autre dans une direction axiale (z) non orthogonale par rapport à l'axe de rotation (1A) du mécanisme de fauchage.

5. Mécanisme de fauchage (1) selon l'une des revendications précédentes,
- le mécanisme de fauchage (1) comportant plusieurs dispositifs d'outil (2), les dispositifs d'outil (2) étant réalisés pour couper l'herbe (300),
- le dispositif de raccordement d'outil (4) et les dispositifs d'outil (2) étant réalisés pour des raccordements à complémentarité de forme (V24) l'un à l'autre pour bloquer les dispositifs d'outil (2) raccordés par complémentarité de forme et les empêcher de se détacher du dispositif de raccordement d'outil (4) dans différentes directions radiales (r) radialement par rapport à l'axe de rotation (1A) du mécanisme de fauchage, et
- le dispositif de blocage (5) et le dispositif de raccordement d'outil (4) étant réalisés de manière ajustable au moins en partie l'un par rapport à l'autre entre la position de déblocage (FP) de déblocage pour établir et/ou détacher les raccordements à complémentarité de forme (V24) et la position de blocage (SP) pour bloquer les raccordements à complémentarité de forme (V24) et les empêcher de se détacher.

6. Mécanisme de fauchage (1) selon la revendication 5,
- le dispositif de blocage (5) et le dispositif de raccordement d'outil (4) étant réalisés de manière totalement ajustable l'un par rapport à l'autre au moins par endroits entre la position de déblocage (FP) et la position de blocage (SP) dans seulement une unique direction radiale (r, -r) ou à l'opposé de celle-ci, ou
- le dispositif de blocage (5) et le dispositif de raccordement d'outil (4) étant réalisés de manière ajustable avec plusieurs pièces (9') l'un par rapport à l'autre au moins par endroits entre la position de déblocage (FP) et la position de blocage (SP) dans des directions radiales (r, -r) différentes ou à l'opposé de celles-ci.

7. Mécanisme de fauchage (1) selon l'une des revendications précédentes,
- le dispositif de blocage (5) ou le dispositif de raccordement d'outil étant réalisé pour modifier au moins une dimension (AM) dans la direction radiale (r) pour l'ajustement au moins par endroits entre la position de déblocage (FP) et la position de blocage (SP).

8. Mécanisme de fauchage (1) selon la revendication 7,
- le dispositif de blocage (5) ou le dispositif de raccordement d'outil comportant une pièce axiale (8) et au moins une pièce radiale (9") raccordée de manière mobile à la pièce axiale (8), la pièce axiale (8) étant réalisée de manière ajustable dans une direction axiale (z) non orthogonale par rapport à l'axe de rotation (1A) du mécanisme de fauchage et la pièce radiale (9") étant réalisée de manière ajustable dans au moins une direction radiale (r) partielle pour modifier la dimension (AM).

9. Mécanisme de fauchage (1) selon l'une des revendications précédentes,
- le dispositif de blocage (5) ou le dispositif de raccordement d'outil comportant au moins une articulation (11, 12) rotative pour l'ajustement au moins par endroits entre la position de déblocage (FP) et la position de blocage (SP).

10. Mécanisme de fauchage (1) selon l'une des revendications précédentes,
- le dispositif de raccordement d'outil (4) et/ou le dispositif de blocage (5) s'étendant dans la direction radiale (r) à l'opposé de l'axe de rotation (1A) du mécanisme de fauchage au moins dans la position de blocage (SP), et/ou
- le dispositif de raccordement d'outil (4) et/ou le dispositif de blocage (5) entourant en totalité, au moins dans la position de blocage (SP), l'axe de rotation (1A) du mécanisme de fauchage dans une direction de rotation (u) autour de l'axe de rotation (1A) du mécanisme de fauchage.

11. Mécanisme de fauchage (1) selon l'une des revendications précédentes,
- le dispositif de raccordement d'outil (4) comportant un premier logement d'arbre (4W) destiné à loger un arbre de rotation (600),
- le dispositif de blocage (5) comportant un deuxième logement d'arbre (5W) destiné à loger l'arbre de rotation (600), et
- le premier logement d'arbre (4W) et le deuxième logement d'arbre (5W) étant réalisés de manière ajustable l'un par rapport à l'autre au moins par endroits entre la position de déblocage (FP) et la position de blocage (SP).

12. Tondeuse à gazon (100) et/ou débroussailleuse (200), la tondeuse à gazon (100) et/ou la débroussailleuse (200) comportant :
- un mécanisme de fauchage (1) selon l'une des revendications précédentes.

13. Tondeuse à gazon (100) et/ou débroussailleuse (200) selon la revendication 12, la tondeuse à gazon (100) et/ou la débroussailleuse (200) comportant :
- un arbre de rotation (600), et
- un élément de fixation (400),
- l'arbre de rotation (600) et le mécanisme de fauchage (1) étant réalisés pour fixer le mécanisme de fauchage (1) dans la position de blocage (SP) sur l'arbre de rotation (600) au moyen de l'élément de fixation (400), et
- l'arbre de rotation (600) et/ou l'élément de fixation (400) et le mécanisme de fauchage (1) fixé étant réalisés pour empêcher l'ajustement dans la position de déblocage (FP).

14. Procédé de montage d'un mécanisme de fauchage (1) selon l'une des revendications 1 à 11 et/ou d'une tondeuse à gazon (100) et/ou d'une débroussailleuse (200) selon la revendication 12 ou 13, le procédé présentant les étapes :
a) d'établissement du raccordement à complémentarité de forme (V24) du dispositif de raccordement d'outil (4) et du dispositif d'outil (2) l'un à l'autre, et
b) d'ajustement du dispositif de blocage (5) et du dispositif de raccordement d'outil (4) au moins en partie l'un par rapport à l'autre entre la position de déblocage (FP) et la position de blocage (SP).
